(19) **Europäisches Patentamt / European Patent Office / Office européen des brevets**

(11) **EP 4 534 500 A1**

(12) **EUROPEAN PATENT APPLICATION**

(43) Date of publication:
**09.04.2025 Bulletin 2025/15**

(21) Application number: **24151563.4**

(22) Date of filing: **12.01.2024**

(51) International Patent Classification (IPC):
*C04B 20/02* (2006.01)    *C04B 26/02* (2006.01)
*C04B 26/26* (2006.01)    *C04B 28/00* (2006.01)
*C04B 28/02* (2006.01)    *C04B 20/04* (2006.01)
*C04B 14/20* (2006.01)    *C04B 14/10* (2006.01)
*C04B 103/00* (2006.01)    *C04B 103/30* (2006.01)
*C04B 111/20* (2006.01)

(52) Cooperative Patent Classification (CPC):
(C-Sets available)
**C04B 20/026; C04B 26/02; C04B 26/26;**
**C04B 28/006; C04B 28/02;** C04B 2103/0088;
C04B 2103/302; C04B 2111/20     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Carbon Upcycling Technologies Inc.
Calgary, AB T2P 3N9 (CA)**

(72) Inventors:
- **CHEN LIEW, Sip
Calgary, T3S 0A2 (CA)**
- **SINHA, Apoorva
Calgary, T3S 0A2 (CA)**

(74) Representative: **Nederlandsch Octrooibureau
P.O. Box 29720
2502 LS The Hague (NL)**

Remarks:
Amended claims in accordance with Rule 137(2)
EPC.

(54) **METHOD OF ACTIVATION OF LOW-KAOLINITE MINERAL FEEDSTOCKS, ACTIVATED MATERIALS OBTAINABLE THEREFROM AND USES THEREOF**

(57) The present invention relates to methods for the mechanochemical activation of low-kaolinite feedstocks. The invention further relates to the activated materials obtainable by said methods and uses thereof. The invention further relates to compositions comprising the mechanochemically activated materials and a further material selected from the group consisting of asphalt, cement, geopolymers, polymers and combinations thereof. The invention further relates to concrete and methods of their preparation.

Fig. 2

**(Cont. next page)**

EP 4 534 500 A1

(52) Cooperative Patent Classification (CPC): (Cont.)

C-Sets
**C04B 20/026, C04B 20/023, C04B 20/04,
C04B 14/20, C04B 14/10;
C04B 26/02, C04B 14/20, C04B 14/10;
C04B 26/26, C04B 14/20, C04B 14/10;
C04B 28/006, C04B 14/20, C04B 14/10;
C04B 28/02, C04B 14/20, C04B 14/10**

**Description**

**FIELD OF THE INVENTION**

The present invention relates to methods for the mechanochemical activation of low-kaolinite feedstocks. The invention further relates to the activated materials obtainable by said methods and uses thereof. The invention further relates to compositions comprising the mechanochemically activated materials and a further material selected from the group consisting of asphalt, cement, geopolymers, polymers and combinations thereof. The invention further relates to concrete and methods of their preparation.

**BACKGROUND ART**

Concrete is a composite material, comprising a matrix of aggregate (typically a rocky material) and a binder (typically Portland cement or asphalt), which holds the matrix together. Concrete is one of the most frequently used building materials and is said to be the second most widely used material on earth, after water.

In order to reduce the cost of concrete and the $CO_2$ emissions generated by global cement production, much research effort has been dedicated to identifying cheap material which can be used as a filler or alternative binder to replace the binder component without (detrimentally) affecting the properties of concrete. Such secondary cementitious materials are an area of broad industry interest.

An example of a widely employed cement filler is limestone. A comprehensive overview of fillers in cementitious materials can be found in John, Vanderley M., et al. "Fillers in cementitious materials-Experience, recent advances and future potential." Cement and Concrete Research 114 (2018): 65-78.

The production of Portland cement contributes to about 8% of world carbon dioxide emissions. According to Vanderley et al. the traditional mitigation strategies for $CO_2$ emissions in the cement industry are not sufficient to ensure the necessary mitigation in a scenario of increasing cement demand. Currently, cement production is increasing due to a combination of increasing urbanization and replacement of old infrastructure.

Hence, there remains a need to develop affordable filler technology which can result in $CO_2$ emission reduction by reduced cement production, which can be produced with a low $CO_2$ footprint and which ideally does not detrimentally affect the properties of concrete.

Thermally activated kaolins have been used as supplementary cementitious materials (SCMs) in blended cements since the 1950s. Heat treatment transforms kaolin (also known as kaolinite - a clay mineral) into metakaolin, a highly pozzolanically reactive material. The process of thermal activation of clay minerals such as kaolin is commonly referred to as calcination. The activation temperature is typically in the range of 550-800 °C. Hence, also the production of calcined clays for use as SCM is responsible for large $CO_2$ emissions.

As an alternative to calcination, more recently the so-called mechanochemical activation of kaolins is being explored. Instead of heat treatment, this process relies on extensive milling to convert the kaolin mineral into an amorphous hydrous material of high specific surface area that is physically, chemically and structurally different from metakaolin obtained by thermal activation. See Souri, Alireza, et al. "Pozzolanic activity of mechanochemically and thermally activated kaolins in cement." Cement and Concrete Research 77 (2015): 47-59 or Vizcayno C et al: "Pozzolan obtained by mechanochemical and thermal treatments of kaolin" Applied clay science, Elsevier, Amsterdam, nl, vol. 49 no. 4, 1 August 2010 pages 405-413 both of which describe grinding of kaolin in an air atmosphere to increase its pozzolanic activity.

However, kaolin-rich rock formations are not always locally available and many other uses for kaolin exist such that its mechanochemical treatment into an SCM is often not an economically viable or interesting option. Thus, there is still a need to develop alternative SCMs.

It is an object of the present invention to provide alternative or improved fillers for cement, geopolymer or asphalt binder.

It is a further object of the present invention to provide alternative or improved fillers for cement, geopolymer or asphalt binder which are cheap to produce.

It is a further object of the present invention to provide alternative or improved fillers for cement, geopolymer or asphalt binder which can be produced with a low $CO_2$ footprint.

It is a further object of the present invention to provide alternative or improved fillers for cement, geopolymer or asphalt binder which improve the properties of the resulting concrete, such as the compressive strength, the strength activity index and/or the water demand.

**SUMMARY OF THE INVENTION**

The present inventors have surprisingly found that low kaolinite feedstocks can be mechanochemically activated to transform other phyllosilicate mineral phases into amorphous phases which exhibit high reactivity, and consequently strong pozzolanic activity when used as an SCM. To the inventor's knowledge they are the first to show activation and pozzolanic activity of phyllosilicate minerals such as illite, muscovite and chlorite.

In a first aspect the present invention provides a method for the mechanochemical activation of low kaolinite feedstocks, said method comprising the following steps:

a) providing a solid feedstock comprising a phyllosilicate mineral, wherein the feedstock has a kaolinite content of less than 50 wt.% as determined by XRD, preferably less than 20 wt.%, more preferably less than 10 wt.%;
b) providing a gas;
c) introducing said feedstock and said gas into a mechanical agitation unit; and
d) subjecting the material of said feedstock to a mechanical agitation operation in the presence of said gas in said mechanical agitation unit

wherein the phyllosilicate mineral is selected from the kaolinite group, serpentinite group, mica group, chlorite group, and combinations thereof.

The phyllosilicate mineral is preferably non-calcined, i.e. it has not been calcined. Thus, the feedstock is preferably non-calcined.

This method can be applied to various types of low-kaolinite phyllosilicate feedstocks, advantageously resulting in unique mechanochemically activated materials.

In another aspect, the invention provides the mechanochemically activated material obtainable from the method of the invention.

As will be shown in the appended examples, it was found that when such mechanochemically activated materials described herein are used as a filler in cement the compressive strength of the resulting concrete is surprisingly increased beyond the values obtained for non-activated phyllosilicates and in particular well beyond the values of pure Portland cement. In particular, the set time for the strength development is strongly improved (shortened) compared to when non-activated phyllosilicates are used as a filler. Furthermore, a much higher amount of this mechanochemically activated material can be used as a filler while still resulting in acceptable or even improved concrete properties. Furthermore, the water demand of cement mixtures is significantly lowered when the present mechanochemically activated materials are employed as supplementary cementitious material.

Additionally, the production of the mechanochemically activated materials of the invention relies on a cheap technology platform capable of operating on dilute $CO_2$ streams, such as directly on a point source emissions of a combustion plant, such that a filler is provided which can be produced in an economically viable manner and which combines both the $CO_2$ emission reduction achieved by reduced cement production and a low production $CO_2$ footprint. Thus, the mechanochemically activated material of the present invention constitutes an excellent filler for many applications, combining distinct mechanical properties with a cost-efficient production technology.

In another aspect, the invention provides a composition comprising a mechanochemically activated material as described herein and a further material selected from the group consisting of asphalt, geopolymers, cement, polymers and combinations thereof.

In another aspect, the invention provides a method for preparing a composition as described herein, said method comprising the following steps:

(i) providing a mechanochemically activated material as described herein;
(ii) providing a further material selected from the group consisting of asphalt, geopolymers, cement, polymers and combinations thereof; and
(iii) combining the mechanochemically activated material of step (i) with the material of step (ii).

In another aspect, the invention provides a method for preparing concrete or mortar, said method comprising the following steps:

(i) providing a mechanochemically activated material as described herein and a further material which is selected from the group consisting of asphalt, cement, geopolymers, and combinations thereof, optionally in the form of the composition as described herein wherein the further material is selected from the group consisting of asphalt, cement, geopolymers, and combinations thereof;
(ii) providing a construction aggregate; and
(iii) contacting, preferably mixing the mechanochemically activated material and the further material of step (i) with the construction aggregate of step (ii) and optionally water.

In another aspect, the invention provides concrete or mortar obtainable by a method for preparing concrete or mortar described herein.

In another aspect the invention provides the use of a mechanochemically activated material as described herein:

- as a filler, preferably as a filler in a material selected from the group consisting of asphalt, geopolymer, cement, mortar, polymers and combinations thereof;
- as a partial replacement for asphalt, geopolymer, clinker or cement in concrete or mortar;
- to increase the compressive strength of concrete, cement or mortar;
- to improve the durability of concrete or mortar;
- to reduce the expansion of concrete;
- to improve the durability of concrete or mortar by reducing chloride permeability and/or porosity;
- to improve the strength activity index of concrete or mortar; and/or
- to reduce the water demand of concrete or mortar,
  preferably,
- to concomitantly improve the strength activity index of concrete and reduce the water demand of concrete; or
- to concomitantly improve the strength activity index of mortar and reduce the water demand of mortar.

## BRIEF DESCRIPTION OF THE FIGURES

The figures show the TGA curves determined for the following materials as described in the examples section.

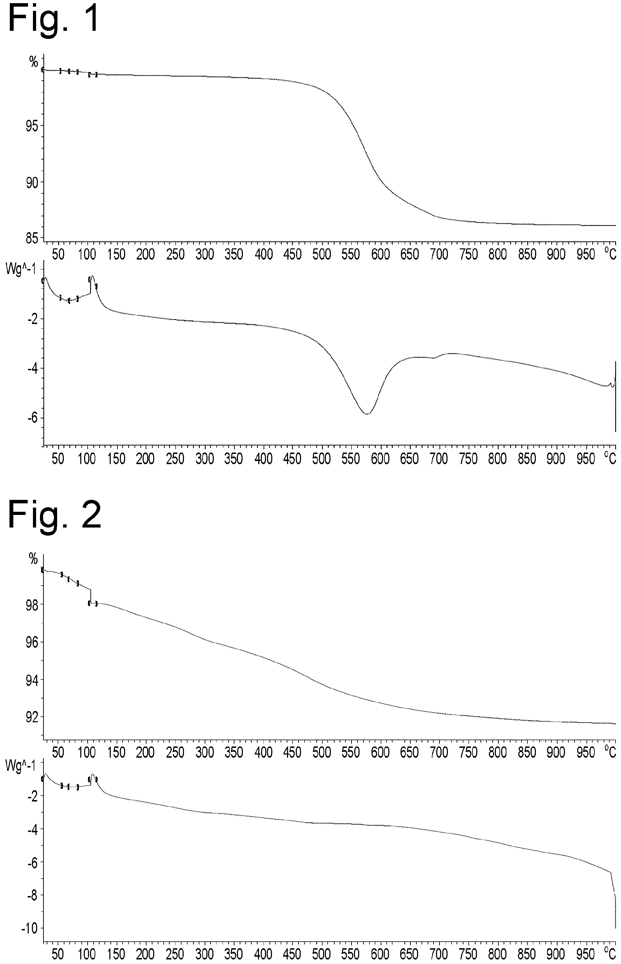

Figure 1: Example 1 raw

Figure 2: Sample 1

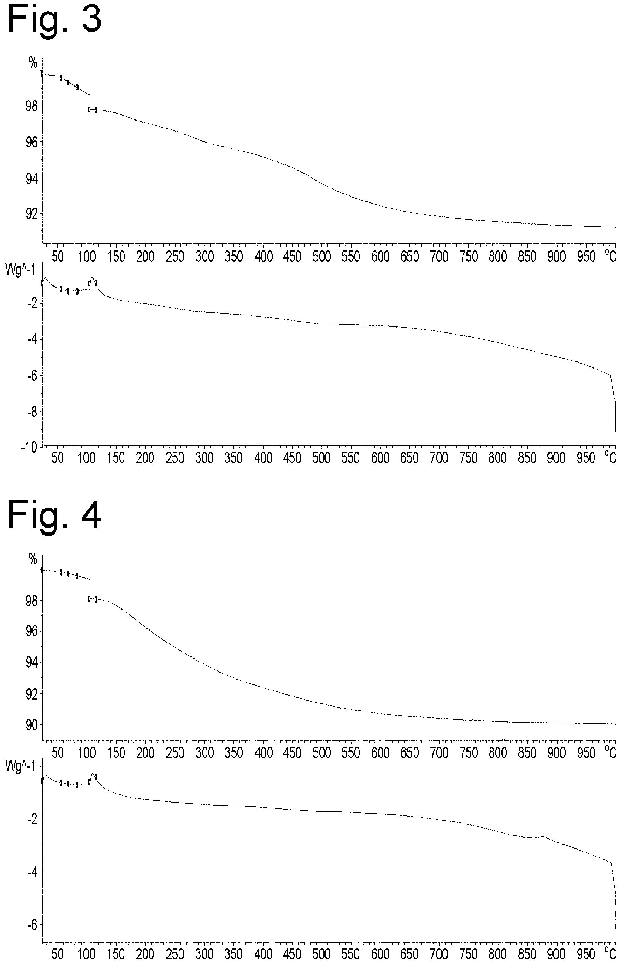

Figure 3: Sample 2

Figure 4: Sample 3

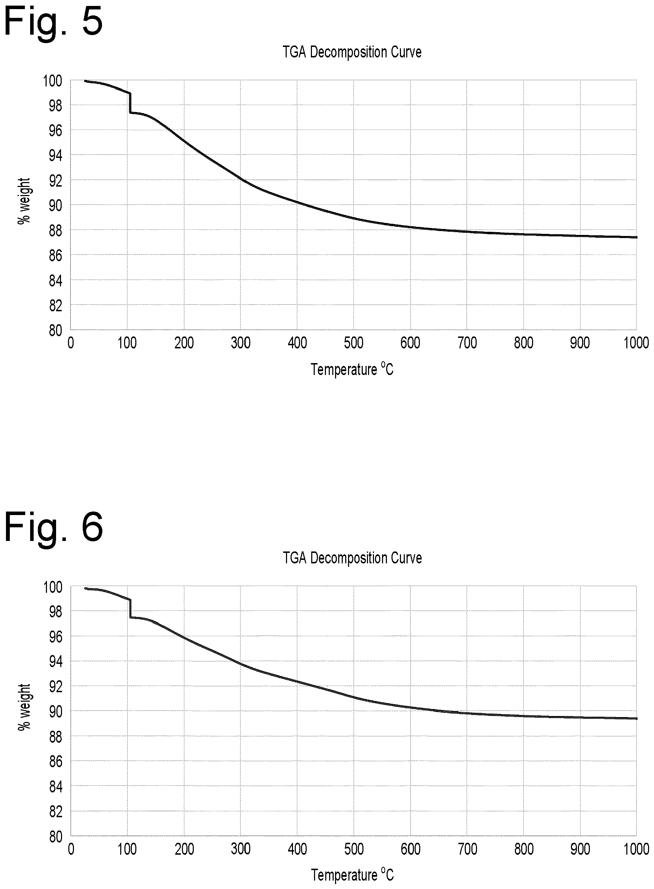

Figure 5: Sample 4

Figure 6: Sample 5

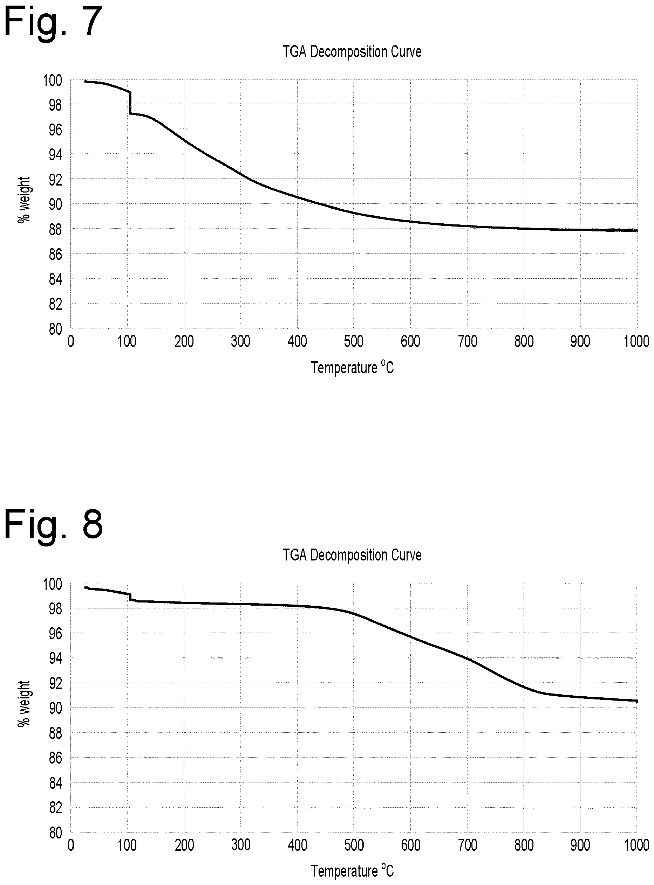

Figure 7: Sample 6

Figure 8: Example 2 raw material

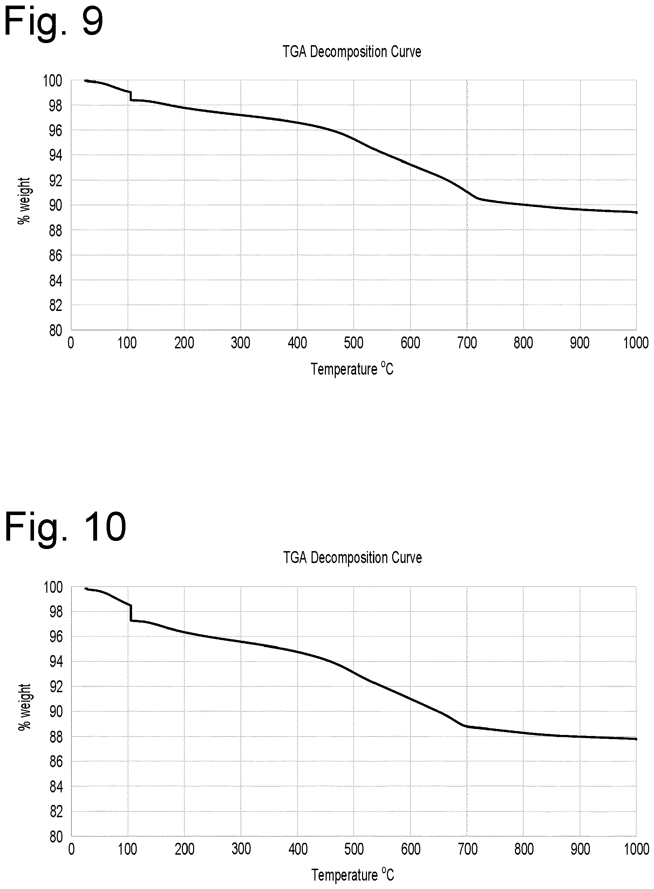

Figure 9: Sample 7

Figure 10: Sample 8

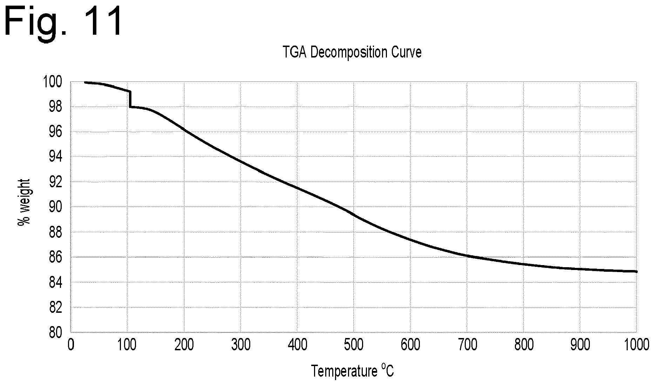

Figure 11: Sample 9

## DESCRIPTION OF EMBODIMENTS

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

Whenever reference is made throughout this document to a compound which is a salt, this should be construed to include the anhydrous form as well as any solvates (in particular hydrates) of this compound.

As is known to the skilled person, all naturally occurring phyllosilicate minerals are hydrated, with water or hydroxyl groups attached. It is known that calcination may dehydrate the minerals. In accordance with preferred embodiments of the invention, the phyllosilicate minerals referred to herein are non-calcined. Thus, they are in hydrated form when they are provided in step (a) of the process.

As is known to the skilled person, minerals can be classified according to various classification systems. Reference to minerals or mineral groups made herein should be interpreted according to the Dana classification system as outlined in Dana's New Mineralogy, Eighth Edition, by Richard V. Gaines, H. Catherine Skinner, Eugene E. Foord, Brian Mason, and Abraham Rosenzweig, with sections by Vandall T. King, Illustrations by Eric Dowty, (ISBN: 047119310-0) Copyright © 1997, John Wiley & Sons, Inc.

The term "mechanochemically activated material" is used herein to refer to the material of the feedstock after it has been subjected to the method of the present invention. As is shown in the appended examples, the methods of the present invention result in amorphization of the phyllosilicate minerals comprised in the material (as observed by XRD) as well as destabilization of the hydrates (as observed by a lower dehydration onset temperature in TGA).

TGA as used herein refers to Thermogravimetric Analysis, a technique known to the person skilled in the art. A preferred TGA setup to determine the water content of the feedstocks and activated materials in the context of the present invention is Mettler Toledo TGA/DSC 3+ employing a 30-40 mg sample. In accordance with the invention, the TGA is performed under an inert atmosphere, such as nitrogen or argon. The dehydration onset temperature referred to herein concerns the dehydration onset temperature as determined by TGA employing a temperature trajectory wherein the temperature was increased from room temperature to 105 °C and held at 105 °C for 5 to 10 minutes before increasing the temperature to 1000 °C using a ramp rate of 10 °C/min.

In accordance with the invention, the particle size distribution characteristics referred to herein such as D10, D50 and D90 as well as the specific surface area are determined by measuring with a laser light scattering particle size analyzer utilizing the Fraunhofer theory of light scattering, such as the Brookhaven laser particle sizer, Model Microbrook 2000LD or another instrument of equal or better sensitivity and reporting the data using a volume equivalent sphere model. As is known to the skilled person, the D50 is the mass median diameter, i.e. the diameter at which 50% of a sample's mass is comprised of smaller particles. Similarly, the D10 and D90 represent the diameter at which 10 or 90% of a sample's mass is comprised of smaller particles.

In accordance with the invention, the compressive strength, strength-activity index and water demand as referred to herein is determined in accordance with ASTM C311/C311M-22. As will be evident to the skilled person, in performing these tests, the feedstock precursor or the activated material of the present invention was used instead of the "fly ash or natural pozzolan" specified by the standard.

The mineralogical composition as well as the amorphous content referred to herein is determined by XRD. Samples for XRD analysis were finely crushed and ground using an Agate mortar and pestle. XRD data was collected using a PANalytical Aeris X-ray diffractometer. Corundum was used as an external standard and was measured with the same instrument configuration shortly after the sample was measured. The weight percentage of amorphous portion of the sample was determined using the K-factor of the external standard phase. The wt.% of minerals and amorphous content used herein in the context of the feedstock provided in step (a) or the activated material, are by total weight of the feedstock or the activated material respectively, unless indicated otherwise.

The elemental compositions referred to herein are determined by EDS. Samples for EDS analysis were finely crushed and ground using an Agate mortar and pestle. EDS data was collected using a JEOL JED-2300 DRY SDD EDS detector.

The heat of hydration referred to herein is tested in accordance with a modified version of the $R^3$ test of ASTM C 1897-20, referred to herein as the modified ASTM C 1897-20, wherein the modifications consist of

- employing a ratio of calcium hydroxide to the supplementary cementitious material to be tested of 3:1;
- employing a liquid to solid ratio of 0.9, with 0.5 M KOH (pH 13.5);
- performing isothermal calorimetry at 50 °C for 10 days; and
- performing thermogravimetric analysis at 10 days.

For the purposes of the present disclosure, ideal gas law is assumed such that the vol% of a gas is considered as equal to the mol%.

## *Method for the mechanochemical activation of phyllosilicate minerals*

In a further aspect, the invention provides a method for the mechanochemical activation of low kaolinite feedstocks, said method comprising the following steps:

a) providing a solid feedstock comprising a phyllosilicate mineral, wherein the feedstock has a kaolinite content of less than 50 wt.% as determined by XRD, preferably less than 20 wt.%, more preferably less than 10 wt.%;

b) providing a gas;

c) introducing said feedstock and said gas into a mechanical agitation unit; and

d) subjecting the material of said feedstock to a mechanical agitation operation in the presence of said gas in said mechanical agitation unit

wherein the phyllosilicate mineral is selected from the kaolinite group, serpentinite group, mica group, chlorite group, and combinations thereof.

In a further aspect, the invention provides a method for the mechanochemical activation of low kaolinite feedstocks, said method comprising the following steps:

a) providing a solid feedstock comprising a non-calcined phyllosilicate mineral, wherein the feedstock has a kaolinite content of less than 50 wt.% as determined by XRD, preferably less than 20 wt.%, more preferably less than 10 wt.%;

b) providing a gas;

c) introducing said feedstock and said gas into a mechanical agitation unit; and

d) subjecting the material of said feedstock to a mechanical agitation operation in the presence of said gas in said mechanical agitation unit.

## The feedstock

The term "feedstock" is to be interpreted as any material consisting of or comprising a (preferably non-calcined) phyllosilicate mineral and having a kaolinite content of less than 50 wt.% as determined by XRD. The phyllosilicate mineral typically occurs intermixed with other minerals and/or amorphous inorganic phases to form the feedstock. Typically the feedstock consists mainly or completely of rock (such as igneous rock, sedimentary rock or metamorphic rock) which was been ground to a particle size suitable for introduction into the process of the invention. Thus, the preferred compositions of the feedstock described herein elsewhere (e.g. specifying contents of various minerals) typically refers to the composition of such naturally occurring rock deposits which were size-reduced to provide the feedstock for the method of the present invention.

In some embodiments of the invention, the phyllosilicate mineral is selected from dickite, halloysite, endellite, kaolinite, nacrite, odinite, antigorite, caryopilite, lizardite, nepouite, greenalite, amesite, berthierine, brindleyite, fraipontite, kellyite, manandonite, cronstedtite, chrysotile, clinochrysotile, orthochrysotile, parachrysotile, pecoraite, bismutoferrite, chapmanite, allophane, hisingerite, imogolite, neotocite, muscovite, paragonite, chernykhite, roscoelite, glauconite, celadonite, ferroceladonite, ferro-aluminoceladonite, aluminoceladonite, chromceladonite, tobelite, nanpingite, boromuscovite, montdorite, chromphyllite, phlogopite, tetra-ferriphlogopite, biotite, annite, tetra-ferri-annite, siderophyllite, eastonite, hendricksite, lepidolite, polylithionite, trilithionite, tainiolite, zinnwaldite, norrishite, masutomilite, aspidolite, wonesite, preiswerkite, ephesite, fluorannite, margarite, clintonite, bityite, anandite, kinoshitalite, ferrokinoshitalite, hydrobiotite, illite, vermiculite, brammallite, baileychlore, borocookeite, chamosite, clinochlore, cookeite, donbassite, franklinfurnaceite, glagolevite, gonyerite, nimite, pennantite, sudoite, and combinations thereof.

Preferably, the phyllosilicate mineral is selected from kaolinite, illite, chlorite, muscovite, montmorillonite, vermiculite, smectite, pyrophyllite, sepiolite, palygorskite, antigorite, chrysotile, lizardite, biotite, fuchsite, muscovite, phlogopite, lepidolite, margarite, glauconite, halloysite, dickite, nacrite, orthoclase, lepidocrite, goethite, albite and combinations thereof, more preferably the phyllosilicate mineral is selected from kaolinite, illite, chlorite, muscovite, and combinations thereof, most preferably the phyllosilicate mineral is selected from illite, chlorite, muscovite, and combinations thereof.

Most preferably, the phyllosilicate mineral is selected from the serpentinite group, mica group, chlorite group, and combinations thereof.

In preferred embodiments of the invention, the phyllosilicate mineral comprised in the feedstock is not calcined, meaning that preferably the feedstock provided in step (a) is not calcined.

### General mineralogical properties of the feedstock

In preferred embodiments of the invention, the phyllosilicate mineral is selected from the kaolinite group, serpentinite group, mica group, chlorite group, and combinations thereof, more preferably the phyllosilicate mineral is selected from the serpentinite group, mica group, chlorite group, and combinations thereof.

Examples of suitable minerals in the kaolinite group are dickite, halloysite, endellite, kaolinite, nacrite, odinite and combinations thereof. Examples of suitable minerals in the serpentine group are antigorite, caryopilite, lizardite, nepouite, greenalite, amesite, berthierine, brindleyite, fraipontite, kellyite, manandonite, cronstedtite, chrysotile, clinochrysotile, orthochrysotile, parachrysotile, pecoraite, bismutoferrite, chapmanite, allophane, hisingerite, imogolite, neotocite and combinations thereof. Examples of suitable minerals in the mica group are muscovite, paragonite, chernykhite, roscoelite, glauconite, celadonite, ferroceladonite, ferro-aluminoceladonite, aluminoceladonite, chromceladonite, tobelite, nanpingite, boromuscovite, montdorite, chromphyllite, phlogopite, tetra-ferriphlogopite, biotite, annite, tetra-ferri-annite, siderophyllite, eastonite, hendricksite, lepidolite, polylithionite, trilithionite, tainiolite, zinnwaldite, norrishite, masutomilite, aspidolite, wonesite, preiswerkite, ephesite, fluorannite, margarite, clintonite, bityite, anandite, kinoshitalite, ferrokinoshitalite, hydrobiotite, illite, vermiculite, brammallite and combinations thereof. Examples of suitable minerals in the chlorite group are baileychlore, borocookeite, chamosite, clinochlore, cookeite, donbassite, franklinfurnaceite, glagolevite, gonyerite, nimite, pennantite, sudoite and combinations thereof.

In some embodiments of the invention, the phyllosilicate mineral is selected from aluminosilicate phyllosilicates such as muscovite, biotite, members of the chlorite group and combinations thereof. In other embodiments of the invention, the phyllosilicate mineral is selected from silicate hydrate phyllosilicates such as kaolinite, halloysite, smectite and combinations thereof.

In the Dana classification system, phyllosilicates are further classified according to their structural features: (i) sheet types (i.e., trioctahedral ordioctahedral) and (ii) layer stacking (1:1 or 2:1). In accordance with preferred embodiments of the invention, the phyllosilicate mineral is selected from the group consisting of phyllosilicates having sheets of 6-membered rings with 1:1 layers; phyllosilicates having sheets of 6-membered rings with 2:1 layers; phyllosilicates having sheets of six membered rings interlayered 1:1, 2:1, and octahedra; and combinations thereof. Preferably, the phyllosilicate mineral is selected from the group consisting of phyllosilicates having sheets of 6-membered rings with 2:1 layers; phyllosilicates having sheets of six membered rings interlayered 1:1, 2:1, and octahedra; and combinations thereof. In some embodiments the phyllosilicate mineral is selected from the kaolinite group, the serpentine group, the mica group, the chlorite group, and combinations thereof, preferably selected from the mica group, the chlorite group, and combinations thereof.

In some embodiments of the invention, the phyllosilicate mineral is selected from phyllosilicates having sheets of 6-membered rings with 1:1 layers. In preferred embodiments, the phyllosilicate mineral is selected from the serpentine group.

In other embodiments, the phyllosilicate mineral is selected from phyllosilicates having sheets of 6-membered rings with 2:1 layers. In preferred embodiments, the phyllosilicate mineral is selected from the mica group, more preferably it is selected from illite, muscovite and combinations thereof, preferably illite. In some embodiments of the invention, the feedstock comprises at least 1 wt.% illite, more preferably at least 5 wt.% illite and most preferably at least 10 wt.% illite. In some embodiments of the invention the feedstock comprises at least 50 wt.% illite, more preferably at least 70 wt.% illite, more preferably at least 85 wt.% illite. In some embodiments of the invention, the feedstock comprises at least 1 wt.% muscovite, more preferably at least 5 wt.% muscovite and most preferably at least 10 wt.% muscovite. In some embodiments of the invention the feedstock comprises at least 50 wt.% muscovite, more preferably at least 70 wt.% muscovite, more preferably at least 85 wt.% muscovite.

In other embodiments, the phyllosilicate mineral is selected from phyllosilicates having sheets of six membered rings interlayered 1:1, 2:1, and octahedra. In preferred embodiments, the phyllosilicate mineral is selected from the chlorite group. In some embodiments of the invention, the feedstock comprises at least 1 wt.% of a mineral species from the chlorite group, more preferably at least 5 wt.% of a mineral species from the chlorite group and most preferably at least 10 wt.% of a mineral species from the chlorite group. In some embodiments of the invention the feedstock comprises at least 50 wt.% of a mineral species from the chlorite group, more preferably at least 70 wt.% of a mineral species from the chlorite group, more preferably at least 85 wt.% of a mineral species from the chlorite group.

In some embodiments, the phyllosilicate mineral is not talc, preferably the phyllosilicate mineral is not selected from the group consisting of talc, serpentine group minerals, olivine and combinations thereof, more preferably the phyllosilicate mineral is not selected from magnesium silicates. In some embodiments the feedstock comprises less than 10 wt.%, preferably less than 5 wt.%, more preferably less than 1 wt.% of talc. In some embodiments the feedstock comprises less than 10 wt.%, preferably less than 5 wt.%, more preferably less than 1 wt.% of talc. In some embodiments the combined amount of talc, serpentine and olivine in the feedstock is less than 10 wt.%, preferably less than 5 wt.%, more preferably less than 1 wt.%. In some embodiments the feedstock comprises less than 10 wt.%, preferably less than 5 wt.%, more preferably less than 1 wt.% of magnesium silicates.

In some embodiments, the phyllosilicate is not selected from the pyrophyllite-talc group. In other embodiments, the phyllosilicate is not selected from pyrophyllite, ferripyrophyllite, talc, willemseite, minnesotaite and combinations thereof, preferably not selected from talc.

In some embodiments of the invention, the feedstock is not significantly carbonatable, for example it comprises less than 0.5 wt.%, preferably less than 0.1 wt.%, more preferably less than 0.05 wt.% of a calcium oxide or hydroxide. In some embodiments the comprises less than 0.5 wt.%, preferably less than 0.1 wt.%, more preferably less than 0.05 wt.% of the total combined amount of oxides and hydroxides of Ca or Mg, preferably from oxides and hydroxides of Ca, Mg, K or Na.

In preferred embodiments of the invention, the feedstock provided in step (a) comprises at least 5 wt.% of the phyllosilicate mineral, preferably at least 10 wt.%, more preferably at least 15 wt.%.

In preferred embodiments the feedstock provided in step (a) comprises at least 5 wt.% quartz, preferably at least 15 wt.% quartz, more preferably at least 30 wt.% quartz. In natural deposits, quartz typically occurs in conjunction with the phyllosilicate mineral such that the feedstock typically comprises at least some quartz.

In preferred embodiments the feedstock provided in step (a) has an amorphous content of at least 10 wt.%, more preferably at least 15 wt.%, most preferably at least 20 wt.%.

In some embodiments of the invention, the total combined amount of the phyllosilicate mineral and kaolinite content in the feedstock provided in step (a) is at least 15 wt.%, more preferably at least 20 wt.%. In some embodiments of the invention, the total combined amount of the phyllosilicate mineral, quartz and kaolinite content in the feedstock provided in step (a) is at least 25 wt.%, more preferably at least 30 wt.%, more preferably at least 35 wt.%.

In other embodiments of the invention, the total combined amount of the phyllosilicate mineral and amorphous content in the feedstock provided in step (a) is at least 80 wt.%, more preferably at least 40 wt.%, more preferably at least 45 wt.%. In some embodiments of the invention, the total combined amount of the phyllosilicate mineral, quartz and amorphous content in the feedstock provided in step (a) is at least 60 wt.%, more preferably at least 65 wt.%, more preferably at least 75 wt.%.

Thus, in some embodiments of the invention the feedstock provided in step (a):

- comprises at least 5 wt.% of the phyllosilicate mineral, preferably at least 10 wt.%, more preferably at least 15 wt.%; and
- has an amorphous content of at least 10 wt.%, more preferably at least 15 wt.%, most preferably at least 20 wt.%; and
- has a total combined amount of the phyllosilicate mineral and amorphous content which is at least 80 wt.%, more preferably at least 90 wt.%, more preferably at least 95 wt.%.

In some embodiments of the invention, the feedstock provided in step (a):

- comprises at least 5 wt.% of the phyllosilicate mineral, preferably at least 10 wt.%, more preferably at least 15 wt.%;
- has an amorphous content of at least 10 wt.%, more preferably at least 15 wt.%, most preferably at least 20 wt.%.
- has a total combined amount of the phyllosilicate mineral and amorphous content which is at least 45 wt.%, more preferably at least 50 wt.%, more preferably at least 55 wt.%.

In some embodiments of the invention, the feedstock provided in step (a):

- comprises at least 5 wt.% of the phyllosilicate mineral, preferably at least 10 wt.%, more preferably at least 15 wt.%;
- has a kaolinite content of less than 20 wt.%, preferably less than 10 wt.%;
- has an amorphous content of at least 10 wt.%, more preferably at least 15 wt.%, most preferably at least 20 wt.%.
- has a total combined amount of the phyllosilicate mineral and amorphous content which is at least 45 wt.%, more preferably at least 50 wt.%, more preferably at least 55 wt.%.

In some embodiments of the invention, the feedstock provided in step (a):

- comprises at least 5 wt.% of the phyllosilicate mineral, preferably at least 10 wt.%, more preferably at least 15 wt.%;
- has a kaolinite content of less than 20 wt.%, preferably less than 10 wt.%;
- has an amorphous content of at least 10 wt.%, more preferably at least 15 wt.%, most preferably at least 20 wt.%.
- has a total combined amount of the phyllosilicate mineral and amorphous content which is at least 45 wt.%, more preferably at least 50 wt.%, more preferably at least 55 wt.%;

wherein the phyllosilicate mineral is selected from the serpentinite group, mica group, chlorite group, and combinations thereof, preferably wherein the phyllosilicate mineral is selected from kaolinite, illite, chlorite, muscovite, and combinations thereof.

In some embodiments of the invention, the feedstock provided in step (a):

- comprises at least 5 wt.% of the phyllosilicate mineral, preferably at least 10 wt.%, more preferably at least 15 wt.%;

- has a kaolinite content of less than 50 wt.% as determined by XRD, preferably less than 20 wt.%, more preferably less than 10 wt.%;

- preferably comprises at least 5 wt.% quartz, preferably at least 15 wt.% quartz, more preferably at least 30 wt.% quartz; and

- has an amorphous content of at least 10 wt.%, more preferably at least 15 wt.%, most preferably at least 20 wt.%; and

- has a total combined amount of the phyllosilicate mineral, quartz and amorphous content which is at least 80 wt.%, more preferably at least 90 wt.%, more preferably at least 95 wt.%.

In some embodiments of the invention, the feedstock provided in step (a):

- at least 1 wt.% illite, more preferably at least 5 wt.% illite and most preferably at least 10 wt.% illite;

- has a kaolinite content of less than 50 wt.% as determined by XRD, preferably less than 20 wt.%, more preferably less than 10 wt.%;

- has an amorphous content of at least 10 wt.%, more preferably at least 15 wt.%, most preferably at least 20 wt.%; and

- has a total combined amount of the illite, kaolinite and amorphous content which is at least 45 wt.%, more preferably at least 50 wt.%, more preferably at least 55 wt.%.

In some embodiments of the invention the feedstock provided in step (a):

- comprises at least 5 wt.% of the phyllosilicate mineral, preferably at least 10 wt.%, more preferably at least 15 wt.%; and

- preferably comprises at least 5 wt.% quartz, preferably at least 15 wt.% quartz, more preferably at least 30 wt.% quartz; and

- has an amorphous content of at least 10 wt.%, more preferably at least 15 wt.%, most preferably at least 20 wt.%; and

- has a total combined amount of the phyllosilicate mineral, quartz and amorphous content which is at least 80 wt.%, more preferably at least 90 wt.%, more preferably at least 95 wt.%.

In some embodiments of the invention, the feedstock provided in step (a) comprises a ratio of kaolinite to amorphous content of at least 1:1.5, more preferably 1:10, even more preferably 1:20, even more preferably 1:30, even more preferably 1:40 and even more preferably 1:50.

In some embodiments of the invention, the feedstock comprises less than 10 wt.% kaolinite, preferably less than 5 wt.% kaolinite and more preferably less than 3 wt.% kaolinite. These low kaolin feedstocks preferably have an amorphous content of more than 10 wt.%, preferably more than 20 wt.%, more preferably more than 25 wt.%. In such embodiments, the feedstock can comprise at least 5 wt.%, preferably at least 10 wt.%, more preferably at least 15 wt.%, more preferably at least 20 wt.%, even more preferably at least 25 wt.% and most preferably at least 30 wt.% quartz. The phyllosilicate mineral is preferably present in the feedstock in an amount of at least 5 wt.%, preferably at least 10 wt.%, more preferably at least 15 wt.%, wherein the phyllosilicate mineral is not kaolinite. Preferably, the phyllosilicate mineral is selected from the group consisting of phyllosilicates having sheets of 6-membered rings with 2:1 layers; phyllosilicates having sheets of six membered rings interlayered 1:1, 2:1, and octahedra; and combinations thereof. In some preferred embodiments of the low kaolinite feedstocks the phyllosilicate mineral is selected from the serpentine group, the mica group, the chlorite group, and combinations thereof, preferably selected from the mica group, the chlorite group, and combinations thereof. Most preferably the phyllosilicate mineral is selected from the mica group, such as illite or muscovite.

Thus, as will be understood from the above, in preferred embodiments of the invention the feedstock provided in step (a):

- comprises less than 10 wt.% kaolinite, preferably less than 5 wt.% kaolinite and more preferably less than 3 wt.% kaolinite; and
- has an amorphous content of more than 10 wt.%, preferably more than 20 wt.%, more preferably more than 25 wt.%; and
- preferably comprises at least 5 wt.% quartz, preferably at least 15 wt.% quartz, more preferably at least 30 wt.% quartz; and
- comprises at least 5 wt.%, preferably at least 10 wt.%, more preferably at least 15 wt.% of the phyllosilicate mineral, wherein the phyllosilicate mineral is not kaolinite;

wherein preferably the phyllosilicate mineral is selected from the mica group, the chlorite group, and combinations thereof, preferably the phyllosilicate mineral is selected from the mica group, most preferably selected from illite, muscovite and combinations thereof.

In preferred embodiments of the invention the feedstock provided in step (a):

- comprises less than 5 wt.% kaolinite and more preferably less than 3 wt.% kaolinite; and
- has an amorphous content of more than 10 wt.%, preferably more than 20 wt.%, more preferably more than 25 wt.%; and
- preferably comprises at least 5 wt.% quartz, preferably at least 15 wt.% quartz, more preferably at least 30 wt.% quartz; and
- comprises at least 10 wt.%, more preferably at least 15 wt.% of the phyllosilicate mineral, wherein the phyllosilicate mineral is not kaolinite;

wherein the phyllosilicate mineral is selected from the mica group, the chlorite group, and combinations thereof, preferably the phyllosilicate mineral is selected from the mica group, most preferably selected from illite, muscovite and combinations thereof.

In preferred embodiments of the invention the feedstock provided in step (a):

- comprises less than 5 wt.% kaolinite and more preferably less than 3 wt.% kaolinite; and
- has an amorphous content of more than 10 wt.%, preferably more than 20 wt.%, more preferably more than 25 wt.%; and
- preferably comprises at least 5 wt.% quartz, preferably at least 15 wt.% quartz, more preferably at least 30 wt.% quartz; and
- comprises at least 10 wt.%, more preferably at least 15 wt.% of the phyllosilicate mineral, wherein the phyllosilicate mineral is not kaolinite; and
- has a total combined amount of the phyllosilicate mineral, quartz and amorphous content which is at least 80 wt.%, more preferably at least 90 wt.%, more preferably at least 95 wt.%

wherein the phyllosilicate mineral is selected from the mica group, the chlorite group, and combinations thereof, preferably the phyllosilicate mineral is selected from the mica group, most preferably selected from illite, muscovite and combinations thereof;

As is shown in the appended examples, it was found that the activated materials obtained from the low kaolinite feedstocks described herein exhibit surprisingly high pozzolanic reactivity, making them useful as an SCM.

*Other feedstock properties*

The solid feedstock provided in step (a) preferably consists of particles having a largest dimension of less than 30 cm, such as less than 20 cm. In preferred embodiments of the present invention, the solid feedstock provided in step (a) has a D10 which is less than 100 mm, preferably less than 50 mm and/or a D50 which is less than 100 mm, preferably less than 50 mm. The D10 and D50 described in this paragraph concerns the mass-based D10 and D50 determined by sieve analysis.

The feedstock preferably has a bulk density greater than 1.5 g/cm$^3$, preferably greater than 2.0 g/cm$^3$, even more preferably greater than 2.3 g/cm$^3$.

The total combined amount of Si and O in the feedstock is preferably at least 60 wt.%, preferably at least 65 wt.%. As explained earlier the feedstock is typically sourced from natural deposits, so may comprise carbon, typically.g. 5-15 wt.% carbon. The total combined amount of Si, O, C, Al, Fe, and K in the feedstock is preferably at least 90 wt.%, more preferably at least 92 wt.%, most preferably at least 94 wt.%.

*Process description*

Step (c) of the method described herein may comprise the introduction of additional solid materials into the mechanical agitation unit, such as grinding aids and milling media (discussed herein elsewhere), or further activatable feedstocks other than the feedstock provided in step (a).

The gas provided in step (b) may be any gas stream, such as regular air, a gas comprising high amounts of inert gas (such as gas comprising > 90 vol% nitrogen or argon), or gas streams comprising elevated $CO_2$ levels compared to air, such as a waste gas stream having an elevated but relatively low $CO_2$ concentration, or concentrated $CO_2$ streams.

In embodiments of the method described herein the gas provided in step (b) is regular air.

However, the $CO_2$ concentration in the gas provided in step (b) is preferably at least 0.1 vol%, more preferably at least 0.5 vol%. As is shown in the appended examples, the present inventors have found that the mechanochemical activation is improved when performed in the presence of such $CO_2$-rich gas. In particular, it was found that the grinding time can be significantly reduced and/or that improved products are obtained when considering properties such as amorphous content, dehydration onset temperature, pozzolanic reactivity, etc.

In highly preferred embodiments of the method described herein the gas provided in step (b) is a combustion flue gas, in particular a flue gas from fossil fuel combustion, wood pellet combustion, biomass combustion or municipal waste combustion. Fossil fuel combustion may be coal, petroleum coke, petroleum, natural gas, shale oil, bitumens, tar sand oil, or heavy oils combustion, or any combination thereof. The combustion flue gas may optionally have been treated to reduce the water content, the $SO_2$ content, and/or the NOx content.

The $CO_2$ concentration in the gas provided in step (b) is preferably at least 0.1 vol%, more preferably at least 0.5 vol%. Typical $CO_2$ concentrations for combustion flue gas are in the range of 1-15 vol%, such as 2-10 vol%, such that it is preferred that the gas provided in step (b) has a $CO_2$ concentration in the range of 1-15 vol%, such as 2-10 vol%. In alternative embodiments of the invention, the gas provided in step (b) comprises at least 80 vol% $CO_2$, preferably at least 95 vol% $CO_2$. In some embodiments of the invention, the gas provided in step (b) comprises at least 80 vol% $CO_2$, preferably at least 95 vol% $CO_2$ and less than 1000 ppm (v/v) $H_2O$, preferably less than 100 ppm (v/v) $H_2O$. In some embodiments, the gas provided in step (b) comprises $CO_2$ in at least 0.1 vol% and $H_2O$ in the range of 5-25 vol%. For example, in case of flue gas, the gas provided in step (b) preferably comprises $CO_2$ in the range of 1-15 vol%, such as 2-10 vol% and $H_2O$ in the range of 5-25 vol%, such as 15-20 vol%. The gas is typically not in a supercritical state as this is not necessary for the mild mechanochemical carbonation process of the present invention. Hence in any embodiment of the invention, it is highly preferred that the gas is not in a supercritical state.

In some embodiments of the invention, the method described herein is provided with the provision that the temperature and pressure during step (d) are such that the pressure is lower than the saturated vapour pressure of water at the temperature in the mechanical agitation unit.

The expression "in the presence of said gas" in step (d) should be construed to mean that the atmosphere inside the mechanical agitation unit consists essentially of the gas provided in step (b) when step (d) is initiated. It will be understood by the skilled person that the composition of the gas will change as the reaction progresses unless the reactor (the mechanical agitation unit) is continuously purged or replenished.

In general, step (d) can be performed at atmospheric pressure, below atmospheric pressure or above atmospheric pressure. However it is preferred that step (d) is performed at a pressure of less than 1000 kPa, preferably less than 500 kPa, more preferably less than 400 kPa, more preferably less than 300 kPa. The present inventors have found that pressures higher than these, while not excluded from the invention, are less optimal as they slow down the mechanochemical activation process. The process can be performed at pressures below atmospheric pressure, but this is typically not necessary such that the energy needed to lower the pressure below atmospheric pressure can be limited or eliminated. Thus, it is preferred that step (d) is performed at a pressure of at least 20 kPa, preferably at least 50 kPa, more preferably at least 80 kPa, most preferably at least 95 kPa, such as most preferably at least about atmospheric pressure. All in all, step (d) is preferably performed at a pressure within the range of 20-500 kPa, preferably 50-400 kPa, most preferably 80-300 kPa. In some embodiments step (d) is performed at a pressure of more than 500 kPa, such as a pressure within the range of 500 kPa to 2500 kPa. In the embodiments of this paragraph it should be understood that the pressure inside the mechanical agitation unit is as specified herein when step (d) is initiated. It will be understood by the skilled person that (if not actively maintained) the pressure of the gas will change as the reaction progresses. In accordance with the invention, step (d) is performed at pressures below the critical pressure of carbon dioxide. In the context of the present invention, it should be understood that the pressure inside the mechanical agitation unit is as specified herein at least one point in time during step (d), for example when step (d) is initiated. In some embodiments, the pressure inside the mechanical agitation unit is as specified herein throughout most or substantially all of step (d).

In preferred embodiments of the method described herein, step (d) is performed at a temperature of at most 500 °C, preferably at most 400 °C, more preferably at most 300 °C. In some embodiments of the method described herein, step (d) is performed at a temperature of less than 150 °C, preferably less than 100 °C, preferably less than 80 °C. Typically the temperature is at least 10 °C, preferably at least 20 °C. The reaction temperature is mostly dependent on the incoming flue gas temperature in case a flue gas is provided in step (b). Typical flue gas temperatures are 120-400°C. In preferred embodiments of the invention, no active heating is applied and any increase in temperature is attributed to the temperature of the gas provided in step (b), the friction resulting from the mechanical agitation or to exothermic reactions taking place during the mechanochemical activation. The temperature of step (d) referred to herein is preferably determined on the solid material in the reactor (i.e. the mechanical agitation unit) during processing.

In embodiments of the invention, step (d) is performed for at least 1 minute, preferably at least 30 minutes, such as at least 1 hour, at least 4 hours, or at least 8 hours. The actual time during which step (d) is performed to achieve activation of the phyllosilicate minerals comprised in the feedstock is dependent on the mechanical agitation equipment used and the operating conditions such as rotational speed in case of a ball mill. It is within the routine capabilities of the skilled person, based on the guidance provided herein, to determine a suitable operating time. For example, regular sampling of material and analysis by XRD allows the evolution in phyllosilicate mineral content and amorphous content to be monitored.

In preferred embodiments of the invention, the mechanical agitation operation of step (d) comprises grinding, milling, mixing, stirring (such as low-speed stirring or high-speed stirring), shearing (such as high-torque shearing), shaking, blending, pulverizing, powderizing, crushing, crumbling, a fluidized bed or ultrasonication, preferably grinding, milling, mixing, stirring (such as low-speed stirring or high-speed stirring), shearing (such as high-torque shearing), or ultrasonication, preferably grinding or milling. The present inventors have found that the mechanochemical carbonation process is facilitated if the mechanochemical agitation operation of step (d) the mechanochemical agitation operation of step (d) is performed in the presence of grinding or milling media, preferably balls, bearings or beads. A preferred material is stainless steel, ceramic or aluminium oxide. In preferred embodiments of the invention, the grinding media is made from stainless steel. In such highly preferred embodiments of the invention, the mechanical agitation operation may be simply rotating the mechanical agitation unit containing the solid feedstock, the grinding or milling media, and the gas. For example, grinding or milling media can be made from steel (e.g. AISI H13, modified H10), aluminium oxide, chrome white cast irons (e.g. ASTM A532), molybdenum steel (e.g. AISI M2, M4, M-42), chromium-based steels (e.g. H11, H12, H13 CPM V9, ZDP-189) or other media with a target HRC hardness of 60. Such grinding or milling media can be utilized with or without surface treatments such as nitriding and carburizing. Calcining of the grinding or milling media can also be undertaken. The use of grinding or milling media can conveniently be performed in a rotating drum. It will be understood that the product obtainable by the process of the invention when step (d) is performed in a rotating drum, may also be obtainable using alternative grinding or milling techniques known to the skilled person. Without wishing to be bound by theory, the present inventors believe that an increased density of the grinding or milling media results in improved particle size distribution and/or amorphization. In as such it is preferred that the density of the grinding or milling media is at least 6.5 $g/cm^3$, preferably at least 7.0 $g/cm^3$ and most preferably at least 7.5 $g/cm^3$ and even more preferably at least 8.0 $g/cm^3$. The present inventors have found that stainless steel grinding or milling media outperforms ceramic material when considering activation of the feedstock, such as amorphization. Without wishing to be bound by any theory, it is believed this may be due to density and/or presence of iron oxide deposits which act as catalysts for the mechanochemical activation of the feedstock.

In some embodiments of the invention, the mechanical agitation operation of step (d) is performed in the presence of grinding aids such as dead burnt magnesia (sintered raw magnesite at a temperature of 1750 °C), activated alumina powder (such as activated alumina powder, preferably having a D90 <10 nm or having a D90 <100 nm), carbon black (preferably having a D90 <60 nm), Graphitic Nano Platelets (GNP) , activated silica, magnesium hydroxide or combinations thereof. In other embodiments, the mechanical agitation operation of step (d) is free from grinding aids except for the grinding or milling media described herein.

In preferred embodiments, the mechanochemical agitation operation of step (d) comprises the use of grinding or milling media selected from balls made from stainless steel having a diameter of less than 20 mm, preferably less than 15 mm, more preferably less than 10 mm and most preferably 6 mm or less. In other embodiments, mechanochemical agitation operation of step (d) comprises the use of grinding or milling media selected from ceramic balls. In some embodiments, the ceramic balls are non-calcined. In other embodiments, the ceramic balls are calcined. In preferred embodiments, the ceramic balls have a diameter of less than 25 mm, preferably less than 20 mm, most preferably less than 15 mm and even more preferably 10 mm or less.

Hence, as will be understood from the above, in highly preferred embodiments of the invention, step (d) comprises grinding, milling, mixing, stirring (such as low-speed stirring or high-speed stirring), shearing (such as high-torque shearing), shaking, blending, pulverizing, powderizing, crushing, crumbling, a fluidized bed or ultrasonication, preferably grinding, milling, mixing, stirring (such as low-speed stirring or high-speed stirring), shearing (such as high-torque shearing), or ultrasonication, most preferably grinding or milling, in the presence of grinding or milling media.

In preferred methods of the invention, the mechanical agitation operation of step (d) utilises grinding or milling media wherein the mass ratio of grinding or milling media to feedstock is more than 5:1, preferably more than 10:1, more preferably more than 25:1. It was found that such high relative amounts of grinding or milling media greatly improve the activation process.

In preferred methods of the invention, aside from optional grinding or milling media, the feedstock provided in step (a) forms the majority of material introduced into the agitation unit in step (c) of the method, and thus forms, aside from optional grinding or milling media, the majority of material present during step (d) of the method. Preferably, aside from optional grinding or milling media, the feedstock provided in step (a) forms at least 90 wt.%, preferably at least 95 wt.%, more preferably about 100 wt.% of material introduced into the agitation unit in step (c) of the method, and thus forms, aside from optional grinding or milling media, at least 90 wt.%, preferably at least 95 wt.%, more preferably about 100 wt.% of material present during step (d) of the method.

**As** will be clear from the present description, in highly preferred embodiments step (d) is a substantially dry process. While some moisture is likely to be naturally present in the feedstock (not to be confused with the hydrates which form part of the mineral structure), step (d) is highly preferably not performed on an aqueous solution or slurry. The present inventors have found that performing step (d) on a solid greatly improves energy efficiency (as no water has to be removed afterwards) and imparts unique properties on the resulting mechanochemically activated materials. In embodiments of the invention, the solid feedstock provided in step (a) has a moisture content of less than 30 wt.% (by total weight of the solid feedstock), preferably less than 20 wt.%, wherein the moisture content is determined by weight loss on drying to constant weight at 120 °C.

The moisture content of the feedstock may be adjusted before or during the method of the present invention, for example by spraying the solid feedstock with an aqueous composition such as water before and/or during step (d).

It is within the routine capabilities of the skilled person to adjust the moisture content of the feedstock based on the guidance provided herein, for example by spraying the solid feedstock with an aqueous composition such as water before and/or during step (d).

In particular, the present inventors have found that it is important that step (d) is carried out such that certain extents of amorphization, size reduction, and/or dehydration onset temperature decrease are effected <u>during step (d)</u>, i.e. during the mechanical agitation. This is representative amongst others for the time of mechanical agitation (such as milling) which is heavily dependent on the equipment used. However, as is shown in the appended examples, the present inventors have found that these properties reach optimum values, after which further mechanical agitation (such as milling) will lead to one or more undesirable effects such as agglomeration (size increase), stabilization of the hydrates (increasing dehydration onset temperature) and recrystallization (decrease in amorphous content).

Thus, in highly preferred embodiments of the invention, the method of the invention is provided wherein amorphization, size reduction, decrease in phyllosilicate mineral content and decrease in dehydration onset temperature are effected during step (d) such that the method has one, two, three or all four, preferably all four, of the following characteristics

- the ratio of the amorphous content of the mechanochemically activated material obtained in step (d) to the amorphous content of the feedstock of step (a) is at least 1.1:1, preferably at least 1.15:1, preferably at least 1.2:1, more preferably at least 1.3:1, preferably at least 1.5:1, preferably at least 2:1, more preferably at least 3:1, even more preferably at least 3.5:1;
- the ratio of the D50 of the mechanochemically activated material obtained in step (d) to the D50 of the feedstock precursor of step (a) is less than 0.95:1, preferably less than 0.9:1, preferably less than 0.85:1, preferably less than 0.8:1, preferably less than 0.7:1, preferably less than 0.6:1, preferably less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 1.1:1, preferably at least 1.15:1, preferably at least 1.2:1, more preferably at least 1.3:1, preferably at least 1.5:1, preferably at least 2:1, more preferably at least 3:1, even more preferably at least 3.5:1, even more preferably at least 4:1;
- the dehydration onset temperature of the mechanochemically activated material obtained in step (d) is less than 250 °C, preferably less than 200 °C, more preferably less than 150 °C, even more preferably less than 130 °C.

In preferred embodiments of the invention, the method of the invention is provided wherein amorphization, size reduction, decrease in phyllosilicate mineral content and decrease in dehydration onset temperature are effected during step (d) such that the method has two, three or all four, preferably all four, of the following characteristics

- the ratio of the amorphous content of the mechanochemically activated material obtained in step (d) to the amorphous content of the feedstock of step (a) is at least 1.5:1, preferably at least 2:1, more preferably at least 3:1, even more preferably at least 3.5:1;
- the ratio of the D50 of the mechanochemically activated material obtained in step (d) to the D50 of the feedstock precursor of step (a) is less than 0.85:1, preferably less than 0.8:1, preferably less than 0.7:1, preferably less than 0.6:1, preferably less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 1.5:1, preferably at least 2:1, more preferably at least 3:1, even more preferably at least 3.5:1, even more preferably at least 4:1;
- the dehydration onset temperature of the mechanochemically activated material obtained in step (d) is less than 250 °C, preferably less than 200 °C, more preferably less than 150 °C, even more preferably less than 130 °C.

In preferred embodiments of the invention, the method of the invention is provided wherein amorphization, size reduction, decrease in phyllosilicate mineral content and decrease in dehydration onset temperature are effected during step (d) such that the method has two, three or all four, preferably all four, of the following characteristics

- the ratio of the amorphous content of the mechanochemically activated material obtained in step (d) to the amorphous content of the feedstock of step (a) is at least 2:1, more preferably at least 3:1, even more preferably at least 3.5:1;
- the ratio of the D50 of the mechanochemically activated material obtained in step (d) to the D50 of the feedstock precursor of step (a) is less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 3:1, even more preferably at least 3.5:1, even more preferably at least 4:1;
- the dehydration onset temperature of the mechanochemically activated material obtained in step (d) is less than 250 °C, preferably less than 200 °C, more preferably less than 150 °C, even more preferably less than 130 °C.

In preferred embodiments of the invention, the method of the invention is provided wherein amorphization, size reduction, decrease in phyllosilicate mineral content and decrease in dehydration onset temperature are effected during step (d) such that the method has one, two, three or all four, preferably all four, of the following characteristics

- the ratio of the amorphous content of the mechanochemically activated material obtained in step (d) to the amorphous content of the feedstock of step (a) is at least 1.1:1, preferably at least 1.15:1, preferably at least 1.2:1, more preferably at least 1.3:1, preferably at least 1.5:1, preferably at least 2:1, more preferably at least 3:1, even more preferably at least 3.5:1;
- the ratio of the D50 of the mechanochemically activated material obtained in step (d) to the D50 of the feedstock precursor of step (a) is less than 0.95:1, preferably less than 0.9:1, preferably less than 0.85:1, preferably less than 0.8:1, preferably less than 0.7:1, preferably less than 0.6:1, preferably less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 1.1:1, preferably at least 1.15:1, preferably at least 1.2:1, more preferably at least 1.3:1, preferably at least 1.5:1, preferably at least 2:1, more preferably at least 3:1, even more preferably at least 3.5:1, even more preferably at least 4:1;
- the dehydration onset temperature of the mechanochemically activated material obtained in step (d) is less than 250 °C, preferably less than 200 °C, more preferably less than 150 °C, even more preferably less than 130 °C;

wherein the feedstock of step (a) comprises less than 10 wt.% kaolinite, preferably less than 5 wt.% kaolinite and more preferably less than 3 wt.% kaolinite by total weight of the feedstock.
In preferred embodiments of the invention, the method of the invention is provided wherein amorphization, size reduction, decrease in phyllosilicate mineral content and decrease in dehydration onset temperature are effected during step (d) such that the method has two, three or all four, preferably all four, of the following characteristics

- the ratio of the amorphous content of the mechanochemically activated material obtained in step (d) to the amorphous content of the feedstock of step (a) is at least 1.5:1, preferably at least 2:1, more preferably at least 3:1, even more preferably at least 3.5:1;
- the ratio of the D50 of the mechanochemically activated material obtained in step (d) to the D50 of the feedstock precursor of step (a) is less than 0.85:1, preferably less than 0.8:1, preferably less than 0.7:1, preferably less than 0.6:1, preferably less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 1.5:1, preferably at least 2:1, more preferably at least 3:1, even more preferably at least 3.5:1, even more preferably at least 4:1;
- the dehydration onset temperature of the mechanochemically activated material obtained in step (d) is less than 250 °C, preferably less than 200 °C, more preferably less than 150 °C, even more preferably less than 130 °C;

wherein the feedstock of step (a) comprises less than 10 wt.% kaolinite, preferably less than 5 wt.% kaolinite and more preferably less than 3 wt.% kaolinite by total weight of the feedstock.

In preferred embodiments of the invention, the method of the invention is provided wherein amorphization, size reduction, decrease in phyllosilicate mineral content and decrease in dehydration onset temperature are effected during step (d) such that the method has one, two, three or all four, preferably all four, of the following characteristics

- the ratio of the amorphous content of the mechanochemically activated material obtained in step (d) to the amorphous content of the feedstock of step (a) is at least 1.1:1, preferably at least 1.15:1, preferably at least 1.2:1, more preferably at least 1.3:1, preferably at least 1.5:1, preferably at least 2:1, more preferably at least 3:1, even more preferably at least 3.5:1;
- the ratio of the D50 of the mechanochemically activated material obtained in step (d) to the D50 of the feedstock precursor of step (a) is less than 0.95:1, preferably less than 0.9:1, preferably less than 0.85:1, preferably less than 0.8:1, preferably less than 0.7:1, preferably less than 0.6:1, preferably less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 1.1:1, preferably at least 1.15:1, preferably at least 1.2:1, more preferably at least 1.3:1, preferably at least 1.5:1, preferably at least 2:1, more preferably at least 3:1, even more preferably at least 3.5:1, even more preferably at least 4:1;
- the dehydration onset temperature of the mechanochemically activated material obtained in step (d) is less than 250 °C, preferably less than 200 °C, more preferably less than 150 °C, even more preferably less than 130 °C;

wherein the feedstock of step (a) has an amorphous content of more than 10 wt.%, preferably more than 20 wt.%, more preferably more than 25 wt.% by total weight of the feedstock.

In preferred embodiments of the invention, the method of the invention is provided wherein amorphization, size reduction, decrease in phyllosilicate mineral content and decrease in dehydration onset temperature are effected during step (d) such that the method has two, three or all four, preferably all four, of the following characteristics

- the ratio of the amorphous content of the mechanochemically activated material obtained in step (d) to the amorphous content of the feedstock of step (a) is at least 1.5:1, preferably at least 2:1, more preferably at least 3:1, even more preferably at least 3.5:1;
- the ratio of the D50 of the mechanochemically activated material obtained in step (d) to the D50 of the feedstock precursor of step (a) is less than 0.85:1, preferably less than 0.8:1, preferably less than 0.7:1, preferably less than 0.6:1, preferably less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 1.5:1, preferably at least 2:1, more preferably at least 3:1, even more preferably at least 3.5:1, even more preferably at least 4:1;
- the dehydration onset temperature of the mechanochemically activated material obtained in step (d) is less than 250 °C, preferably less than 200 °C, more preferably less than 150 °C, even more preferably less than 130 °C;

wherein the feedstock of step (a) has an amorphous content of more than 10 wt.%, preferably more than 20 wt.%, more preferably more than 25 wt.% by total weight of the feedstock.

In preferred embodiments of the invention, the method of the invention is provided wherein amorphization, size reduction, decrease in phyllosilicate mineral content and decrease in dehydration onset temperature are effected during step (d) such that the method has one, two, three or all four, preferably all four, of the following characteristics

- the ratio of the amorphous content of the mechanochemically activated material obtained in step (d) to the amorphous content of the feedstock of step (a) is at least 1.1:1, preferably at least 1.15:1, preferably at least 1.2:1, more preferably at least 1.3:1, preferably at least 1.5:1, preferably at least 2:1, more preferably at least 3:1, even more preferably at least 3.5:1;
- the ratio of the D50 of the mechanochemically activated material obtained in step (d) to the D50 of the feedstock precursor of step (a) is less than 0.95:1, preferably less than 0.9:1, preferably less than 0.85:1, preferably less than 0.8:1, preferably less than 0.7:1, preferably less than 0.6:1, preferably less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 1.1:1, preferably at least 1.15:1, preferably at least 1.2:1, more preferably at least 1.3:1, preferably at least 1.5:1, preferably at least 2:1, more preferably at least 3:1, even more preferably at least 3.5:1, even more preferably at least 4:1;

- the dehydration onset temperature of the mechanochemically activated material obtained in step (d) is less than 250 °C, preferably less than 200 °C, more preferably less than 150 °C, even more preferably less than 130 °C;

wherein the feedstock of step (a) comprises at least 1 wt.% illite, more preferably at least 5 wt.% illite and most preferably at least 10 wt.% illite by total weight of the feedstock.

In preferred embodiments of the invention, the method of the invention is provided wherein amorphization, size reduction, decrease in phyllosilicate mineral content and decrease in dehydration onset temperature are effected during step (d) such that the method has two, three or all four, preferably all four, of the following characteristics

- the ratio of the amorphous content of the mechanochemically activated material obtained in step (d) to the amorphous content of the feedstock of step (a) is at least 1.5:1, preferably at least 2:1, more preferably at least 3:1, even more preferably at least 3.5:1;
- the ratio of the D50 of the mechanochemically activated material obtained in step (d) to the D50 of the feedstock precursor of step (a) is less than 0.85:1, preferably less than 0.8:1, preferably less than 0.7:1, preferably less than 0.6:1, preferably less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 1.5:1, preferably at least 2:1, more preferably at least 3:1, even more preferably at least 3.5:1, even more preferably at least 4:1;
- the dehydration onset temperature of the mechanochemically activated material obtained in step (d) is less than 250 °C, preferably less than 200 °C, more preferably less than 150 °C, even more preferably less than 130 °C;

wherein the feedstock of step (a) comprises at least 1 wt.% illite, more preferably at least 5 wt.% illite and most preferably at least 10 wt.% illite by total weight of the feedstock.

In preferred embodiments of the invention, the method of the invention is provided wherein amorphization, size reduction, decrease in phyllosilicate mineral content and decrease in dehydration onset temperature are effected during step (d) such that the method has one, two, three or all four, preferably all four, of the following characteristics

- the ratio of the amorphous content of the mechanochemically activated material obtained in step (d) to the amorphous content of the feedstock of step (a) is at least 1.1:1, preferably at least 1.15:1, preferably at least 1.2:1, more preferably at least 1.3:1, preferably at least 1.5:1, preferably at least 2:1, more preferably at least 3:1, even more preferably at least 3.5:1;
- the ratio of the D50 of the mechanochemically activated material obtained in step (d) to the D50 of the feedstock precursor of step (a) is less than 0.95:1, preferably less than 0.9:1, preferably less than 0.85:1, preferably less than 0.8:1, preferably less than 0.7:1, preferably less than 0.6:1, preferably less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 1.1:1, preferably at least 1.15:1, preferably at least 1.2:1, more preferably at least 1.3:1, preferably at least 1.5:1, preferably at least 2:1, more preferably at least 3:1, even more preferably at least 3.5:1, even more preferably at least 4:1;
- the dehydration onset temperature of the mechanochemically activated material obtained in step (d) is less than 250 °C, preferably less than 200 °C, more preferably less than 150 °C, even more preferably less than 130 °C;

wherein the feedstock of step (a) comprises at least 50 wt.% illite, more preferably at least 70 wt.% illite, more preferably at least 85 wt.% illite by total weight of the feedstock.

In preferred embodiments of the invention, the method of the invention is provided wherein amorphization, size reduction, decrease in phyllosilicate mineral content and decrease in dehydration onset temperature are effected during step (d) such that the method has two, three or all four, preferably all four, of the following characteristics

- the ratio of the amorphous content of the mechanochemically activated material obtained in step (d) to the amorphous content of the feedstock of step (a) is at least 1.5:1, preferably at least 2:1, more preferably at least 3:1, even more preferably at least 3.5:1;
- the ratio of the D50 of the mechanochemically activated material obtained in step (d) to the D50 of the feedstock precursor of step (a) is less than 0.85:1, preferably less than 0.8:1, preferably less than 0.7:1, preferably less than 0.6:1, preferably less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 1.5:1, preferably at least 2:1, more preferably at least 3:1, even more preferably at least 3.5:1, even more preferably at least 4:1;

- the dehydration onset temperature of the mechanochemically activated material obtained in step (d) is less than 250 °C, preferably less than 200 °C, more preferably less than 150 °C, even more preferably less than 130 °C;

wherein the feedstock of step (a) comprises at least 50 wt.% illite, more preferably at least 70 wt.% illite, more preferably at least 85 wt.% illite by total weight of the feedstock.

In preferred embodiments of the invention, the method of the invention is provided wherein amorphization, size reduction, decrease in phyllosilicate mineral content and decrease in dehydration onset temperature are effected during step (d) such that the method has one, two, three or all four, preferably all four, of the following characteristics

- the ratio of the amorphous content of the mechanochemically activated material obtained in step (d) to the amorphous content of the feedstock of step (a) is at least 1.1:1, preferably at least 1.15:1, preferably at least 1.2:1, more preferably at least 1.3:1, preferably at least 1.5:1, preferably at least 2:1, more preferably at least 3:1, even more preferably at least 3.5:1;
- the ratio of the D50 of the mechanochemically activated material obtained in step (d) to the D50 of the feedstock precursor of step (a) is less than 0.95:1, preferably less than 0.9:1, preferably less than 0.85:1, preferably less than 0.8:1, preferably less than 0.7:1, preferably less than 0.6:1, preferably less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 1.1:1, preferably at least 1.15:1, preferably at least 1.2:1, more preferably at least 1.3:1, preferably at least 1.5:1, preferably at least 2:1, more preferably at least 3:1, even more preferably at least 3.5:1, even more preferably at least 4:1;
- the dehydration onset temperature of the mechanochemically activated material obtained in step (d) is less than 250 °C, preferably less than 200 °C, more preferably less than 150 °C, even more preferably less than 130 °C;

wherein the feedstock of step (a) comprises at least 1 wt.% of a mineral species from the chlorite group, more preferably at least 5 wt.% of a mineral species from the chlorite group and most preferably at least 10 wt.% of a mineral species from the chlorite group by total weight of the feedstock.

In preferred embodiments of the invention, the method of the invention is provided wherein amorphization, size reduction, decrease in phyllosilicate mineral content and decrease in dehydration onset temperature are effected during step (d) such that the method has two, three or all four, preferably all four, of the following characteristics

- the ratio of the amorphous content of the mechanochemically activated material obtained in step (d) to the amorphous content of the feedstock of step (a) is at least 1.5:1, preferably at least 2:1, more preferably at least 3:1, even more preferably at least 3.5:1;
- the ratio of the D50 of the mechanochemically activated material obtained in step (d) to the D50 of the feedstock precursor of step (a) is less than 0.85:1, preferably less than 0.8:1, preferably less than 0.7:1, preferably less than 0.6:1, preferably less than 0.5:1, more preferably less than 0.4:1, even more preferably less than 0.3:1 and most preferably less than 0.2:1;
- the ratio of the phyllosilicate content of the feedstock of step (a) to the phyllosilicate content of the mechanochemically activated material obtained in step (d) is at least 1.5:1, preferably at least 2:1, more preferably at least 3:1, even more preferably at least 3.5:1, even more preferably at least 4:1;
- the dehydration onset temperature of the mechanochemically activated material obtained in step (d) is less than 250 °C, preferably less than 200 °C, more preferably less than 150 °C, even more preferably less than 130 °C;

wherein the feedstock of step (a) comprises at least 1 wt.% of a mineral species from the chlorite group, more preferably at least 5 wt.% of a mineral species from the chlorite group and most preferably at least 10 wt.% of a mineral species from the chlorite group by total weight of the feedstock.

It is preferred that step (d) is performed such that the dehydration onset temperature of the mechanochemically activated material obtained in step (d) is at least 50 °C lower than the dehydration onset temperature of the feedstock provided in step (a), preferably at least 100 °C lower, more preferably at least 175 °C lower. As the skilled person will understand this comprises grinding for a sufficient amount of time. However it was found by the inventors that overgrinding leads to reagglomeration and recrystallization and stabilization of hydrates, such that the process should be stopped in time.

**As** will be understood by the skilled person, it is preferred that step (d) is ended when the amorphization, size reduction and/or dehydration onset temperature trends begin to reverse. During step (d) the specific surface area increase is proportional to the grinding time until the specific surface area enters the agglomeration stage, that is where the specific surface area decreases and the particles are chemically bonded together into agglomerates. In preferred embodiments, the step (d) is ended before or shortly after the D10, D50, D90 and/or the specific surface area start to increase after the first reduction phase. For example, in some highly preferred embodiments the activated material is recovered from step (d) when the D50 is less than 120% of the minimal D50 achieved during step (d). In some embodiments of the invention, the activated material is recovered from step (d) when the mechanochemically activated material exhibits one, two or all of the following characteristics:

- a D10 within the range of 0.005-3 $\mu$m, preferably 0.01-2 $\mu$m, most preferably 0.1-1.4 $\mu$m;
- a D50 within the range of 0.1-30 $\mu$m, preferably 0.5-15 $\mu$m, most preferably 1-10 $\mu$m;
- a D90 within the range of 0.5-100 $\mu$m, preferably 1-80 $\mu$m, most preferably 5-70 $\mu$m;
- a dehydration onset temperature of less than 250 °C, preferably less than 200 °C, more preferably less than 150 °C, even more preferably less than 130 °C, even more preferably less than 120 °C and most preferably less than 110 °C;
- a phyllosilicate mineral content of less than 10 wt.%, by total weight of mechanochemically activated material, preferably less than 5 wt.%.

In embodiments of the invention, the method described herein does not comprise a solid-liquid separation step selected from filtration, decantation, and gravitational separation (e.g. using cyclones) after step (d), preferably the method of the invention does not comprise any solid-liquid separation step after step (d).
In embodiments of the invention, the method described herein does not comprise a size-selection step, such as a screening or sieving step, after step (d).

***Properties of the mechanochemically activated material obtained in step (d)***

**Step** (d) typically comprises recovering the mechanochemically activated material. In practice, in case of batch operation, the mechanical agitation operation is halted and activated material is removed from the agitation unit. In case of a continuous process, activated material may be continuously recovered.
In another aspect the invention provides the mechanochemically activated material obtainable from the method described herein. The properties of the mechanochemically activated material described herein in the context of step (d) of the method of the invention are equally applicable to the mechanochemically activated material obtainable from the method.
In some embodiments of the invention, the mechanochemically activated material obtainable from the method described herein has one, two, three or four, preferably all four of the following properties:

- a D50 within the range of 0.1-30 $\mu$m, preferably 0.5-15 $\mu$m, most preferably 1-10 $\mu$m;
- a dehydration onset temperature of less than 250 °C, preferably less than 200 °C, more preferably less than 150 °C, even more preferably less than 130 °C;
- an amorphous content of at least 25 wt.%, preferably at least 30 wt.% and more preferably at least 35 wt.%;
- a phyllosilicate mineral content of less than 10 wt.%, by total weight of mechanochemically activated material, preferably less than 5 wt.%.

In some embodiments, the mechanochemically activated material obtained from step (d) has a dehydration onset temperature which is at least 50 °C lower than the dehydration onset temperature of the feedstock provided in step (a), preferably at least 100 °C lower, more preferably at least 175 °C lower.
In some embodiments, the mechanochemically activated material obtained from step (d) has an amorphous content of at least 25 wt.%, preferably at least 30 wt.%, more preferably at least 35 wt.%, even more preferably at least 40 wt.% and most preferably at least 50 wt.%.
Without wishing to be bound by any theory, the inventors are of the view that grinding breaks the phyllosilicate layer stacks and results in increased structural disorder resulting in a weaker bonding of OH groups and in reduced dehydration temperatures. The hydroxyl sites in native phyllosilicate as present in the feedstock have a dehydration temperature between 440-450 °C as observed by TGA. In some embodiments, mechanochemically activated material obtainable from the method described herein is provided having a dehydration onset temperature to less than 250 °C, preferably less than 200 °C, more preferably less than 150 °C, even more preferably less than 130 °C. In such embodiments the inventors found that the obtained mechanochemically activated material results in a reduced water demand when used as supplementary cementitious material.
In preferred embodiments the mechanochemically activated material obtained from step (d) meets the strength requirements set out in ASTM C618-12a (2012). In particular embodiments, the method described herein does not comprise a size-selection step, such as a screening or sieving step, after step (d) and the feedstock obtained in step (d) meets the strength requirements set out in ASTM C618-12a (2012).
In embodiments of the invention, the mechanochemically activated material obtained in step (d) has a specific surface area of less than 5 m2/g, preferably less than 3 m2/g, more preferably less than 2 m2/g.

In embodiments of the invention, the mechanochemically activated material obtained in step (d) has one, two, or three, preferably three, of the following characteristics:

- a D10 within the range of 0.005-3 $\mu$m, preferably 0.01-2 $\mu$m, most preferably 0.1-1.4 $\mu$m;
- a D50 within the range of 0.1-30 $\mu$m, preferably 0.5-15 $\mu$m, most preferably 1-10 $\mu$m;
- a D90 within the range of 0.5-100 $\mu$m, preferably 1-80 $\mu$m, most preferably 5-70 $\mu$m.

In accordance with the invention, the mechanochemically activated material obtained in step (d) typically has a strength activity index (SAI) at day 7 which is at least 80%, preferably at least 85%. The inventors have observed that the mechanochemical process of the present invention allows obtaining mechanochemically activated material having excellent day 7 SAI. Hence, in preferred embodiments the mechanochemically activated material obtained in step (d) has a SAI at day 7 of at least 105%, preferably at least 110%, even more preferably at least 125% .

In embodiments of the invention, the mechanochemically activated material obtained in step (d) has a strength activity index (SAI) at day 28 which is at least 75%, preferably at least 95%, more preferably at least 100%. The inventors have observed that the mechanochemical process of the present invention allows obtaining mechanochemically activated material having excellent day 28 SAI. Hence, in preferred embodiments the mechanochemically activated material obtained in step (d) has a SAI at day 28 of at least 110%, preferably at least 115%, even more preferably at least 125%.

In some embodiments of the invention, the mechanochemically activated material obtained in step (d) has a heat of hydration at 12h determined according to the modified ASTM C 1897-20 which is at least 100 J/g, preferably at least 150 J/g, more preferably at least 200 J/g. The mechanochemically activated material obtained in step (d) preferably has a heat of hydration at 72h determined according to the modified ASTM C 1897-20 which is at least 150 J/g, preferably at least 200 J/g, more preferably at least 250 J/g.

In embodiments of the invention, the mechanochemically activated material obtained in step (d) has a water demand which is less than 97%, preferably less than 96%, more preferably less than 95%. The inventors have observed that the mechanochemical process of the present invention allows obtaining mechanochemically activated material having an extremely low water demand. Hence, in preferred embodiments the mechanochemically activated material obtained in step (d) has a water demand which is less than 93%, preferably less than 91%.

## *Composition comprising a mechanochemically activated material, and method for the preparation thereof*

The materials of obtainable by the mechanochemical activation of the present invention are useful amongst others as supplementary cementitious material. Hence, in another aspect the invention provides a composition comprising a mechanochemically activated material as described herein and a further material selected from the group consisting of asphalt, cement, geopolymers, polymers, and combinations thereof, preferably cement, more preferably Portland cement.

In embodiments of the invention, the further material is a polymer selected from thermoplastic polymers and thermosetting polymers. In preferred embodiments of the invention, the further component is a polymer selected from the group consisting of epoxide resin, phenol-formaldehyde resin, polyalkylene terephthalate (preferably polyethylene terephthalate), polalkylene adipate terephthalate (preferably polybutylene adipate terephthalate), polyalkylene isosorbide terephthalate (preferably polyethylene isosorbide terephthalate), polyalkylene aromatic polyamide (preferably polyethylene aromatic polyamide), polyacrylonitrile, polyacetal, polyimide, aromatic polyester, polyisoprene (preferably cis-1,4-polyisoprene), polyethylene, polypropylene, polyurethane, polyisocyanurate, polyamide, polyether, polyester, polyhydroxyalkanoate, polylactic acid, poly lactic-co-glycolic acid, polyvinylidene fluoride, polyvinyl acetate, polyvinyl chloride, polystyrene, polytetrafluoroethylene, acrylonitrile-butadiene-styrene, nitrile rubber, styrenebutadiene, ethylene-vinyl acetate, copolymers thereof and combinations thereof, more preferably a polyolefin, such as polypropylene, polyethylene, copolymers thereof and combinations thereof. The term "polymer" as used herein includes copolymers, such as block copolymers.

In highly preferred embodiments the further material is selected from cement, asphalt, geopolymers or combinations thereof.

In accordance with the invention, the cement may be a hydraulic or non-hydraulic cement. In preferred embodiments of the invention, the cement is a hydraulic cement, such as Portland cement. In highly preferred embodiments of the invention, the cement is one of the cements defined in EN197-1 (2011), preferably Portland cement as defined in EN197-1 (2011).

In embodiments of the invention, the composition comprises at least 0.1 wt.% (by total weight of the composition), preferably at least 1 wt.%, more preferably more than 5 wt.% of the mechanochemically activated material and/or at least 0.1 wt.% (by total weight of the composition), preferably more than 1 wt.%, more preferably more than 20 wt.% of the further material.

In embodiments of the invention, the composition comprises less than 60 wt.% (by total weight of the composition), preferably less than 50 wt.%, more preferably less than 45 wt.% of the mechanochemically activated material and/or less than 95 wt.% (by total weight of the composition), preferably less than 90 wt.%, more preferably less than 80 wt.% of the further material.

In embodiments of the invention, the composition is provided wherein the weightweight ratio of the mechanochemically activated material to the further material is within the range of 1:9 to 2:1, preferably within the range of 1:8 to 1:1, more preferably within the range of 1:6 to 5:6.

In embodiments of the invention, the composition comprises 5-70 wt.% (by total weight of the composition), preferably 10-60 wt.%, more preferably 20-50 wt.% of the mechanochemically activated material and 30-95 wt.% (by total weight of the composition), preferably 40-90 wt.%, preferably 50-80 wt.% of the further material.

In embodiments of the invention, the composition comprises less than 5 wt.% (by total weight of the composition water, preferably less than 1 wt.%, more preferably less than 0.1 wt.%. The amount of water can suitably be determined as the mass loss up to 120°C measured by TGAMS employing a temperature trajectory wherein the temperature was increased from room temperature to 800°C at a rate of 10°C/min.

In embodiments of the invention, the composition consists of the mechanochemically activated material and the further material.

In another aspect the invention provides a method for preparing a composition as described herein, said method comprising the following steps:

(i) providing a mechanochemically activated material as described herein, preferably a mechanochemically activated material as described herein;
(ii) providing a further material selected from the group consisting of asphalt, cement, geopolymers, polymers and combinations thereof;
(iii) combining the mechanochemically activated material solid of step (i) with the material of step (ii).

### A method for preparing concrete or mortar

Hence, in another aspect the invention provides a method for preparing concrete or mortar, said method comprising the following steps:

(i) providing a mechanochemically activated material as described herein and a further material which is selected from the group consisting of asphalt, cement, geopolymers, and combinations thereof, optionally in the form of the composition as described herein wherein the further material is selected from the group consisting of asphalt, cement, geopolymers, and combinations thereof;
(ii) providing a construction aggregate; and
(iii) contacting, preferably mixing the mechanochemically activated material and the further material of step (i) with the construction aggregate of step (ii) and optionally water.

In another aspect the invention provides a concrete or mortar obtainable by the method for preparing concrete as described herein.

In preferred embodiments of the invention, step (iii) further comprises contacting, preferably mixing the mechanochemically activated material and the further material of step (i) with the construction aggregate of step (ii) and water. In accordance with the invention, the mechanochemically activated material and the further material of step (i), the construction aggregate of step (ii) and the water may be contacted, preferably mixed at substantially the same time, or in a step-wise manner wherein the composition of step (i) is first contacted, preferably mixed with water, before being contacted, preferably mixed with the construction aggregate of step (ii).

In another aspect the invention provides the use of a mechanochemically activated material as described herein:

- as a filler, preferably as a filler in a material selected from the group consisting of asphalt, cement, geopolymers, mortar, polymers and combinations thereof;
- as a partial replacement for asphalt, geopolymer, clinker or cement in concrete or mortar;
- to increase the compressive strength of concrete, cement or mortar;
- to improve the durability of concrete or mortar;
- to reduce the expansion of concrete;
- to improve the durability of concrete or mortar by reducing chloride permeability and/or porosity;
- to improve the strength activity index of concrete or mortar; and/or
- to reduce the water demand of concrete or mortar,
  preferably,

- to concomitantly improve the strength activity index of concrete and reduce the water demand of concrete; or
- to concomitantly improve the strength activity index of mortar and reduce the water demand of mortar.

**Examples**

Particle Size Distribution and specific surface area measurements were carried out on a Brookhaven laser particle sizer, Model Microbrook 2000LD using utilizing the Fraunhofer theory of light scattering and reporting the data using a volume equivalent sphere model.

Compressive strength, strength activity index and water demand was measured in accordance with ASTM C311/C311M-22. As will be evident to the skilled person, in performing these tests, the clay precursor or the carbonated clay of the present invention was used instead of the "fly ash or natural pozzolan" specified by the standard.

**XRD** data was collected using a PANalytical Aeris X-ray diffractometer. Samples for XRD analysis were finely crushed and ground using an Agate mortar and pestle. Corundum was used as an external standard and was measured with the same instrument configuration shortly after the sample was measured. The weight percentage of amorphous portion of the sample was determined using the K-factor of the external standard phase.

**The** heat of hydration was measured according to the modified ASTM C 1897-20.

**The** hydration onset temperature and the wt.% hydrates was determined using a Mettler Toledo TGA/DSC 3+ employing a 30-40 mg sample wherein the TGA is performed under an inert atmosphere, employing a temperature trajectory wherein the temperature was increased from room temperature to 105 °C and held at 105 °C for 5 to 10 minutes before increasing the temperature to 1000 °C using a ramp rate of 10 °C/min. The wt.% hydrates is calculated based on the mass loss as determined by TGA at different temperatures (105 °C and 1000 °C) according to the following formula:

$$\frac{TGA\ mass\ loss\ (\%)_{105} - TGA\ mass\ loss\ (\%)_{1000}}{TGA\ mass\ loss\ (\%)_{105}}$$

The elemental composition was determined by EDS. Samples for EDS analysis were finely crushed and ground using an Agate mortar and pestle. EDS data was collected using a JEOL JED-2300 DRY SDD EDS detector.

In the following tables, where the gas is Ar or $CO_2$ it concerns 99 vol% or higher Ar or $CO_2$ respectively.

Feedstocks used in the examples were course materials comprising particles of size 1-10 cm.

*Example 1*

Mechanochemically activated material was produced by inserting 50 g of **feedstock 1** (non-calcined shale comprising 3.5 wt.% kaolinite, 10.8 wt.% chlorite, 20.4 wt.% illite, 19.8 wt.% quartz, 33.9 wt.% amorphous content) into a pressure cell with 1.4 kg of first milling media (stainless steel ball balls of 6 mm diameter). The cell is pressurized with gas and rotated on rollers at 65 RPM to obtain mechanochemically activated material. The reaction was initiated at room temperature and no heating or cooling was applied.

Table 1: Conditions applied during the mechanochemical activation of feedstock

| | Sample 1 | Sample 2 | Sample 3 | Sample 4 | Sample 5 | Sample 6 |
|---|---|---|---|---|---|---|
| **Gas** | Air | Air | Air | $CO_2$ | $CO_2$ | $CO_2$ |
| **Pressure (PSIG)** | 0 | 0 | 0 | 65 | 65 | 65 |
| **Ball** | Stainless steel | Stainless steel | Stainless steel | Stainless steel | Stainless steel | Stainless steel |
| **Time (h)** | 24 | 48 | 72 | 24 | 48 | 72 |

**The** results of the mechanochemical activation are shown in the table below.

Table 2: Results of the mechanochemical activation of the feedstock

| | Sample 1 | Sample 2 | Sample 3 | Sample 4 | Sample 5 | Sample 6 |
|---|---|---|---|---|---|---|
| **Amorphous wt.%** | 40.4 | 48.4 | 46.4 | 57.2 | 68.0 | 59.9 |
| **D10 ($\mu$m)** | 0.78 | 0.71 | 0.74 | 1.23 | 0.84 | 0.92 |

(continued)

| | Sample 1 | Sample 2 | Sample 3 | Sample 4 | Sample 5 | Sample 6 |
|---|---|---|---|---|---|---|
| D50 ($\mu$m) | 2.87 | 207 | 2.16 | 8.57 | 6.90 | 702 |
| D90 ($\mu$m) | 11.71 | 9.95 | 1052 | 208.1 | 34.58 | 3383 |
| SSA (m$^2$/g) | 1.15 | 1.38 | 1.32 | 0.63 | 0.84 | 0.80 |
| TGA mass loss @ 105 °C (%) | 2 | 2 | 3 | 2.5 | 2.5 | 2.5 |
| TGA mass loss @ 1000 °C (%) | 8 | 8 | 10 | 12 | 105 | 12 |
| Hydrates wt.% | 6 | 6 | 7 | 10 | 8 | 10 |
| Dehydration onset temperature (°C) | 110 | 110 | 110 | 130 | 110 | 110 |

*Example 2*

Mechanochemically activated material was produced by inserting 50 g of **feedstock 2** (non-calcined clay comprising 6.4 wt.% kaolinite, 10.8 wt.% chlorite, 19 wt.% illite, 31 wt.% quartz, 24.1 wt.% amorphous content) into a pressure cell with 1.4 kg of first milling media (ceramic ball balls of 10 mm diameter or stainless steel balls of 6 mm diameter). The cell is pressurized with gas and rotated on rollers at 65 RPM to obtain mechanochemically activated material. The reaction was initiated at room temperature and no heating or cooling was applied.

Table 3: Conditions applied during the mechanochemical activation of feedstock

| | Sample 7 | Sample 8 | Sample 9 |
|---|---|---|---|
| Gas | Air | $CO_2$ | $CO_2$ |
| Pressure (PSIG) | 0 | 65 | 65 |
| Ball | Ceramic | Ceramic | Stainless steel |
| Time (h) | 48 | 48 | 48 |

The results of the mechanochemical activation are shown in the table below.

Table 6: Results of the mechanochemical activation of the feedstock

| | Sample 7 | Sample 8 | Sample 9 |
|---|---|---|---|
| Kaolinite wt.% | 3.0 | 0.6 | 0.5 |
| Illite wt.% | 18.8 | 108 | 4.8 |
| Quartz wt.% | 30.7 | 27.4 | 28.2 |
| Amorphous wt.% | 31.3 | 51.3 | 59.8 |
| D10 ($\mu$m) | 0.8 | 0.74 | 0.73 |
| D50 ($\mu$m) | 3.2 | 2.44 | 2.89 |
| D90 ($\mu$m) | 462.8 | 8.93 | 10.89 |
| SSA (m$^2$/g) | 1.1 | 1.30 | 1.27 |

**The** elemental composition of the feedstock before and after mechanochemical activation is shown in Table 7.

Table 7: Elemental composition of the feedstock before and after treatment

| wt.% | Feedstock 2 | Sample 9 |
|---|---|---|
| O | 53.39 | 54.29 |
| Si | 17.90 | 16.94 |
| C | 8.44 | 10.62 |

(continued)

| wt.% | Feedstock 2 | Sample 9 |
|------|-------------|----------|
| Al | 6.54 | 6.07 |
| Fe | 5.24 | 4.31 |
| K | 2.68 | 2.40 |
| Ca | 2.28 | 2.06 |
| Mg | 1.83 | 1.72 |
| Na | 0.65 | 0.69 |
| Ti | 0.49 | 0.41 |
| Cl | 0.32 | 0.26 |
| Cu | 0.13 | - |
| S | 0.12 | 0.13 |
| Mn | - | 0.09 |
| Cr | - | 0.03 |
| Ni | - | - |

### Example 3

**Feedstock 1** (non-calcined shale comprising 3.5 wt.% kaolinite, 10.8 wt.% chlorite, 20.4 wt.% illite, 19.8 wt.% quartz, 33.9 wt.% amorphous content) was submitted to a large scale test using 5 kg of feedstock and 300 kg of milling media (stainless steel balls). Ball milling was performed for 48 hours at 65 PSIG pressure of flue gas (about 4 vol% $CO_2$) to obtain Sample 10.

The results of the mechanochemical activation are shown in the table below.

Table 8: Results of the mechanochemical activation of the feedstock

| | Feedstock 1 | Sample 10 |
|---|-------------|-----------|
| **Kaolinite wt.%** | 3.5 | 0.5 |
| **Illite wt.%** | 20.4 | 1.5 |
| **Chlorite wt.%** | 10.8 | 0.3 |
| **Quartz wt.%** | 19.8 | 17.0 |
| **Amorphous wt.%** | 33.9 | 73.0 |
| **SAI 7 day (%)** | 101 | 132 |
| **SAI 28 day (%)** | 95 | 118 |
| **Heat of hydration 12 h (J/g)** | 8.75 | 277.97 |
| **Heat of hydration 72 h (J/g)** | 22.36 | 323.26 |

### Claims

1.  A method for the mechanochemical activation of low kaolinite feedstocks, said method comprising the following steps:

a) providing a solid feedstock comprising a phyllosilicate mineral, wherein the feedstock has a kaolinite content of less than 50 wt.% as determined by XRD, preferably less than 20 wt.%, more preferably less than 10 wt.%;
b) providing a gas;
c) introducing said feedstock and said gas into a mechanical agitation unit; and
d) subjecting the material of said feedstock to a mechanical agitation operation in the presence of said gas in said mechanical agitation unit;

wherein the phyllosilicate mineral is selected from the kaolinite group, serpentinite group, mica group, chlorite group and combinations thereof.

2.  The method of claim 1 wherein the phyllosilicate mineral is selected from the serpentinite group, mica group, chlorite group, and combinations thereof

3.  The method of claim 2 wherein the phyllosilicate mineral is selected from illite, chlorite, muscovite, and combinations thereof.

4.  The method according to any one of claims 1 to 3, wherein the phyllosilicate mineral is present in an amount of at least 5 wt.%, preferably at least 10 wt.%, more preferably at least 15 wt.% by total weight of the feedstock.

5.  The method of any one of the previous claims, wherein the phyllosilicate mineral is not kaolinite and the feedstock of step (a) comprises less than 10 wt.% kaolinite, preferably less than 5 wt.% kaolinite and more preferably less than 3 wt.% kaolinite.

6.  The method according to any one of the previous claims, wherein the feedstock comprises at least 10 wt.% quartz, preferably at least 15 wt.% quartz, more preferably at least 20 wt.% quartz by total weight of the feedstock.

7.  The method according to any one of the previous claims, wherein the feedstock has an amorphous content of at least 10 wt.%, preferably at least 15 wt.%, more preferably at least 20 wt.% as determined by XRD.

8.  The method of any one of the previous claims, wherein the total combined amount of Si and O in the feedstock is at least 60 wt.%, preferably at least 65 wt.%.

9.  The method according to any one of the previous claims, wherein step (d) is performed such that the dehydration onset temperature of the mechanochemically activated material obtained in step (d) is at least 50 °C lower than the dehydration onset temperature of the feedstock provided in step (a), preferably at least 100 °C lower, more preferably at least 175 °C lower.

10.  The method according to any one of the previous claims wherein the gas provided in step (b) is air or a gas comprising at least 0.1 vol% $CO_2$.

11.  A mechanochemically activated material obtainable by the method of any one of claims 1 to 10.

12.  The mechanochemically activated material according to claim 11, which has one, two, three or four, preferably all four of the following properties:

     • a D50 within the range of 0.1-30 $\mu$m, preferably 0.5-15 $\mu$m, most preferably 1-10 $\mu$m;
     • a dehydration onset temperature of less than 250 °C, preferably less than 200 °C, more preferably less than 150 °C, even more preferably less than 130 °C;
     • an amorphous content of at least 25 wt.%, preferably at least 30 wt.% and more preferably at least 35 wt.%;
     • a phyllosilicate mineral content of less than 10 wt.%, by total weight of mechanochemically activated material, preferably less than 5 wt.%.

13.  A composition comprising the mechanochemically activated material of any one of claims 11 or 12, and a further material selected from the group consisting of asphalt, geopolymers, cement, polymers, and combinations thereof, preferably cement, more preferably Portland cement.

14.  A method for preparing concrete or mortar, said method comprising the following steps:

     (i) providing the mechanochemically activated material of any one of claims 11 or 12, and a further material which is selected from the group consisting of asphalt, cement, geopolymers, and combinations thereof, optionally in the form of the composition as described in claim 13 wherein the further material is selected from the group consisting of asphalt, cement, geopolymers, and combinations thereof;
     (ii) providing a construction aggregate;
     (iii) contacting, preferably mixing the mechanochemically activated material and the further material of step (i) with the construction aggregate of step (ii) and optionally water.

**15.** The use of the mechanochemically activated material of any one of claims 11 or 12:

• as a filler, preferably as a filler in a material selected from the group consisting of asphalt, geopolymer, cement, mortar, polymers and combinations thereof;
• as a partial replacement for asphalt, geopolymer, clinker or cement in concrete or mortar;
• to increase the compressive strength of concrete, cement or mortar;
• to improve the durability of concrete or mortar;
• to reduce the expansion of concrete;
• to improve the durability of concrete or mortar by reducing chloride permeability and/or porosity;
• to improve the strength activity index of concrete or mortar; and/or
• to reduce the water demand of concrete or mortar,
preferably,
• to concomitantly improve the strength activity index of concrete and reduce the water demand of concrete; or
• to concomitantly improve the strength activity index of mortar and reduce the water demand of mortar.

**Amended claims in accordance with Rule 137(2) EPC.**

**1.** A method for the mechanochemical activation of low kaolinite feedstocks, said method comprising the following steps:

a) providing a solid feedstock comprising a phyllosilicate mineral, wherein the feedstock has a kaolinite content of less than 50 wt.% as determined by XRD, preferably less than 20 wt.%, more preferably less than 10 wt.%;
b) providing a gas;
c) introducing said feedstock and said gas into a mechanical agitation unit; and
d) subjecting the material of said feedstock to a mechanical agitation operation in the presence of said gas in said mechanical agitation unit;
wherein the phyllosilicate mineral is selected from the kaolinite group, serpentinite group, mica group, chlorite group and combinations thereof;
wherein step (d) is performed at a temperature of less than 150 °C; and
wherein the mechanochemically activated material is obtained in step (d) has a D50 within the range of 0.5-15 $\mu$m and a strength activity index (SAI) at day 28 of at least 110%, wherein the SAI is determined in accordance with ASTM C311/C311M-22.

**2.** The method of claim 1 wherein the phyllosilicate mineral is selected from the serpentinite group, mica group, chlorite group, and combinations thereof

**3.** The method of claim 2 wherein the phyllosilicate mineral is selected from illite, chlorite, muscovite, and combinations thereof.

**4.** The method according to any one of claims 1 to 3, wherein the phyllosilicate mineral is present in an amount of at least 5 wt.%, preferably at least 10 wt.%, more preferably at least 15 wt.% by total weight of the feedstock.

**5.** The method of any one of the previous claims, wherein the phyllosilicate mineral is not kaolinite and the feedstock of step (a) comprises less than 10 wt.% kaolinite, preferably less than 5 wt.% kaolinite and more preferably less than 3 wt.% kaolinite.

**6.** The method according to any one of the previous claims, wherein the feedstock comprises at least 10 wt.% quartz, preferably at least 15 wt.% quartz, more preferably at least 20 wt.% quartz by total weight of the feedstock.

**7.** The method according to any one of the previous claims, wherein the feedstock has an amorphous content of at least 10 wt.%, preferably at least 15 wt.%, more preferably at least 20 wt.% as determined by XRD.

**8.** The method of any one of the previous claims, wherein the total combined amount of Si and O in the feedstock is at least 60 wt.%, preferably at least 65 wt.%.

**9.** The method according to any one of the previous claims, wherein step (d) is performed such that the dehydration onset temperature of the mechanochemically activated material obtained in step (d) is at least 50 °C lower than the dehydration onset temperature of the feedstock provided in step (a), preferably at least 100 °C lower, more preferably at least 175 °C lower.

10. The method according to any one of the previous claims wherein the gas provided in step (b) is air or a gas comprising at least 0.1 vol% $CO_2$.

11. A mechanochemically activated material obtainable by the method of any one of claims 1 to 10.

12. The mechanochemically activated material according to claim 11, which has one, two, three or four, preferably all four of the following properties:

   • a D50 within the range of 1-10 $\mu$m;
   • a dehydration onset temperature of less than 250 °C, preferably less than 200 °C, more preferably less than 150 °C, even more preferably less than 130 °C;
   • an amorphous content of at least 25 wt.%, preferably at least 30 wt.% and more preferably at least 35 wt.%;
   • a phyllosilicate mineral content of less than 10 wt.%, by total weight of mechanochemically activated material, preferably less than 5 wt.%.

13. A composition comprising the mechanochemically activated material of any one of claims 11 or 12, and a further material selected from the group consisting of asphalt, geopolymers, cement, polymers, and combinations thereof, preferably cement, more preferably Portland cement.

14. A method for preparing concrete or mortar, said method comprising the following steps:

   (i) providing the mechanochemically activated material of any one of claims 11 or 12, and a further material which is selected from the group consisting of asphalt, cement, geopolymers, and combinations thereof, optionally in the form of the composition as described in claim 13 wherein the further material is selected from the group consisting of asphalt, cement, geopolymers, and combinations thereof;
   (ii) providing a construction aggregate;
   (iii) contacting, preferably mixing the mechanochemically activated material and the further material of step (i) with the construction aggregate of step (ii) and optionally water.

15. The use of the mechanochemically activated material of any one of claims 11 or 12:

   • as a filler, preferably as a filler in a material selected from the group consisting of asphalt, geopolymer, cement, mortar, polymers and combinations thereof;
   • as a partial replacement for asphalt, geopolymer, clinker or cement in concrete or mortar;
   • to increase the compressive strength of concrete, cement or mortar;
   • to improve the durability of concrete or mortar;
   • to reduce the expansion of concrete;
   • to improve the durability of concrete or mortar by reducing chloride permeability and/or porosity;
   • to improve the strength activity index of concrete or mortar; and/or
   • to reduce the water demand of concrete or mortar,
   preferably,
   • to concomitantly improve the strength activity index of concrete and reduce the water demand of concrete; or
   • to concomitantly improve the strength activity index of mortar and reduce the water demand of mortar.

# Fig. 1

# Fig. 2

# Fig. 3

# Fig. 4

# Fig. 5

TGA Decomposition Curve

# Fig. 6

TGA Decomposition Curve

# Fig. 7

TGA Decomposition Curve

# Fig. 8

TGA Decomposition Curve

# Fig. 9

TGA Decomposition Curve

# Fig. 10

TGA Decomposition Curve

# Fig. 11

TGA Decomposition Curve

Europäisches
Patentamt

European
Patent Office

Office européen
des brevets

# EUROPEAN SEARCH REPORT

**Application Number**

EP 24 15 1563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 909 682 B1 (PFEIFFER SE GEBR [DE]) 6 April 2022 (2022-04-06) * column 9 - column 95 * | 1-15 | INV. C04B20/02 C04B26/02 C04B26/26 |
| X | BAKI VAHIDDIN ALPEREN ET AL: "The impact of mechanochemical activation on the physicochemical properties and pozzolanic reactivity of kaolinite, muscovite and montmorillonite", CEMENT AND CONCRETE RESEARCH., vol. 162, 1 December 2022 (2022-12-01), page 106962, XP093170178, US ISSN: 0008-8846, DOI: 10.1016/j.cemconres.2022.106962 * page 2 - page 3 * | 1-15 | C04B28/00 C04B28/02 C04B20/04 C04B14/20 C04B14/10 C04B103/00 C04B103/30 C04B111/20 |
| X | VIZCAYNO C ET AL: "Pozzolan obtained by mechanochemical and thermal treatments of kaolin", APPLIED CLAY SCIENCE, ELSEVIER, AMSTERDAM, NL, vol. 49, no. 4, 1 August 2010 (2010-08-01), pages 405-413, XP027198140, ISSN: 0169-1317 [retrieved on 2009-10-03] * page 405 - page 412 * | 1-15 | |
| X | TURIANICOVÁ E ET AL: "Interaction of natural and thermally processed vermiculites with gaseous carbon dioxide during mechanical activation", APPLIED CLAY SCIENCE, ELSEVIER, AMSTERDAM, NL, vol. 88, 22 December 2013 (2013-12-22), pages 86-91, XP028826812, ISSN: 0169-1317, DOI: 10.1016/J.CLAY.2013.11.005 * page 86 - page 87 * | 1-12 | **TECHNICAL FIELDS SEARCHED (IPC)** C04B |

The present search report has been drawn up for all claims

| Place of search | Date of completion of the search | Examiner |
|---|---|---|
| Munich | 12 July 2024 | Kresoja, Radoje |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 15 1563

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2024

| Patent document cited in search report | | Publication date | Patent family member(s) | | Publication date |
|---|---|---|---|---|---|
| EP 3909682 | B1 | 06-04-2022 | BR | 102021009164 A2 | 23-11-2021 |
| | | | CN | 113666657 A | 19-11-2021 |
| | | | DK | 3909682 T3 | 04-07-2022 |
| | | | EP | 3909682 A1 | 17-11-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOHN, VANDERLEY M. et al.** Fillers in cementitious materials-Experience, recent advances and future potential. *Cement and Concrete Research*, 2018, vol. 114, 65-78
- **SOURI, ALIREZA et al.** Pozzolanic activity of mechanochemically and thermally activated kaolins in cement. *Cement and Concrete Research*, 2015, vol. 77, 47-59

- Pozzolan obtained by mechanochemical and thermal treatments of kaolin. **VIZCAYNO C et al.** Applied clay science. Elsevier, 01 August 2010, vol. 49, 405-413
- **RICHARD V. GAINES** ; **H. CATHERINE SKINNER** ; **EUGENE E. FOORD** ; **BRIAN MASON** ; **ABRAHAM ROSENZWEIG**. Dana's New Mineralogy. John Wiley & Sons, 1997